# EUROPEAN PATENT APPLICATION

(11) **EP 4 564 792 A1**
(43) Date of publication of application: **04.06.2025**
(21) Application number: 23865780.3
(22) Date of filing: 05.09.2023
(51) Int. Cl.: H04M 1/72454, H04M 1/72469, H04M 1/02, G06F 3/0482, G06F 3/0484, G06F 3/041

(54) **ELECTRONIC DEVICE FOR DISPLAYING LIST OF APPLICATIONS ON BASIS OF TYPE OF FLEXIBLE DISPLAY AND METHOD THEREFOR**

(30) Priority: 17.09.2022 KR 20220117496
(71) Applicant: Samsung Electronics Co., Ltd., Suwon-si, Gyeonggi-do 16677 (KR)
(72) Inventor: LEE, Bona, Suwon-si Gyeonggi-do 16677 (KR); NAM, Myoungwoo, Suwon-si Gyeonggi-do 16677 (KR); MOON, Minjeong, Suwon-si Gyeonggi-do 16677 (KR); PARK, Chanpyo, Suwon-si Gyeonggi-do 16677 (KR); LEE, Seungyong, Suwon-si Gyeonggi-do 16677 (KR)
(74) Representative: HGF
(86) International application number: PCT/KR2023/013287
(87) International publication number: WO 2024/058482

(57) **Abstract**

An electronic device according to an embodiment may compare a first angle range and the angle of a flexible display bent by a folding shaft, identified on the basis of data identified from one or more sensors, in response to an input indicating display of a list of applications. The electronic device may display a list comprising images corresponding to screens of applications on a first portion of the flexible display distinguished by the folding shaft, on the basis of an angle included in the first angle range, and may display a first screen corresponding to a first application on a second portion of the flexible display. The electronic device may display a second screen corresponding to a second application on the second portion in response to another input indicating selection of an image corresponding to the second application, received inside a list of the first portion. The electronic device may display a third screen corresponding to the second application on all of the first and second portions on the basis of an angle increased to a second angle range.

## Description

### [Technical Field]

The present disclosure relates to an electronic device for displaying a list of applications based on a shape of a flexible display, and a method thereof.

### [Background Art]

An electronic device having a deformable form factor is being developed using a flexible display. For example, an electronic device including a plurality of foldable housings may provide a user experience based on a shape of the electronic device to a user, using a flexible display positioned across the plurality of housings. For example, based on a shape of the flexible display that is folded or unfolded by an external force of the user, the electronic device may change content displayed on the flexible display. For another example, an electronic device that rolls or unfolds a flexible display is being developed.

### [Disclosure]

### [Technical Solution]

An electronic device according to an embodiment may comprise a first housing, a second housing, a hinge assembly rotatably coupled to the first housing and the second housing based on a folding axis, a flexible display positioned on a surface of the first housing and a surface of the second housing, one or more sensors, memory storing instructions, and a processor operably coupled to the memory. The processor, when executing the instructions, may be configured to cause the electronic device to compare, in response to an input indicating to display a list of a plurality of applications executed by the processor in the flexible display, an angle of the flexible display bent by the folding axis to a first angle range, the angle being identified based on data of the one or more sensors. The processor may be configured to display, in response to identifying the angle included in the first angle range, the list including images respectively corresponding to screens of the plurality of applications in a first portion among portions of the flexible display distinguished by the folding axis, and display a first screen corresponding to a first application in a second portion different from the first portion among the portions. The processor may be configured to display, in response to another input indicating to select an image corresponding to a second application, the another input being received in the list displayed in the first portion, a second screen corresponding to the second application selected by the another input in the second portion. The processor may be configured to display, in response to identifying that the angle of the flexible display is increased to a second angle range greater than the first angle range while displaying the second screen in the second portion, a third screen corresponding to the second application in both the first portion and the second portion.

A method of an electronic device according to an embodiment may comprise comparing, in response to an input indicating to display a list of a plurality of applications executed by a processor of the electronic device in a flexible display of the electronic device, an angle of the flexible display bent by the folding axis of a housing of the electronic device to a first angle range, the angle being identified based on data identified by the one or more sensors of the electronic device. The method may comprise displaying, in response to identifying the angle included in the first angle range, the list including images respectively corresponding to screens of the plurality of applications in a first portion among portions of the flexible display distinguished by the folding axis, and displaying a first screen corresponding to a first application in a second portion different from the first portion among the portions. The method may comprise displaying, in response to another input indicating to select an image corresponding to a second application, the another input being received in the list displayed in the first portion, a second screen corresponding to the second application selected by the another input in the second portion. The method may comprise displaying, in response to identifying that the angle of the flexible display is increased to a second angle range greater than the first angle range while displaying the second screen in the second portion, a third screen corresponding to the second application in both the first portion and the second portion.

An electronic device according to an embodiment may comprise a first housing, a second housing, a hinge assembly rotatably coupled to the first housing and the second housing based on a folding axis, a flexible display positioned on a surface of the first housing and a surface of the second housing, one or more sensors, memory storing instructions, and a processor operably coupled to the memory. The processor, when executing the instructions, may be configured to cause the electronic device to obtain, in response to an input indicating to select a designated visual object displayed in the flexible display, a plurality of images respectively corresponding to a plurality of applications executed by the processor. The processor may be configured to identify, based on the one or more sensors, an angle of the flexible display which is foldable based on the folding axis. The processor may be configured to display, based on identifying an angle of the flexible display included in a first angle range based on the one or more sensors, a list of the plurality of applications based on the plurality of images which are displayed in a first portion among portions of the flexible display distinguished by the folding axis, and display a screen corresponding to a first application among the plurality of applications in a second portion different from the first portion. The processor may be configured to display, based on identifying an angle of the flexible display included in a second angle range greater than the first angle range based on the one or more sensors, the list of the plurality of applications based on the plurality of images in a display region of the flexible display including the first portion and the second portion.

A method of an electronic device according to an embodiment may comprise obtaining, in response to an input indicating to select a designated visual object displayed in a flexible display of the electronic device, a plurality of images respectively corresponding to a plurality of applications executed by a processor of the electronic device. The method may comprise identifying, based on one or more sensors of the electronic device, an angle of the flexible display which is foldable based on a folding axis of the electronic device. The method may comprise displaying, based on identifying an angle of the flexible display included in a first angle range based on the one or more sensors, a list of the plurality of applications based on the plurality of images which are displayed in a first portion among portions of the flexible display distinguished by the folding axis, and displaying a screen corresponding to a first application among the plurality of applications in a second portion different from the first portion. The method may comprise displaying, based on identifying an angle of the flexible display included in a second angle range greater than the first angle range based on the one or more sensors, the list of the plurality of applications based on the plurality of images in a display region of the flexible display including the first portion and the second portion.

### [Description of the Drawings]

FIG. 1 is a block diagram of an electronic device according to an embodiment.
FIGS. 2A to 2B illustrate an example of different states of a housing and/or a flexible display of an electronic device according to an embodiment.
FIGS. 3A to 3B illustrate an example of screens in which an electronic device according to embodiment displays in states associate with a shape of a flexible display.
FIGS. 4A to 4B illustrate an example of an operation in which an electronic device according to an embodiment changes a screen displayed in a flexible display, based on a change in a shape of the flexible display.
FIGS. 5A to 5B illustrate an example of screens in which an electronic device according to an embodiment displays in different states distinguished by a shape of a flexible display.
FIGS. 6A to 6B illustrate an example of screens in which an electronic device according to an embodiment displays in different states distinguished by orientation of the electronic device identified by a sensor.
FIG. 7 illustrates an example of screens in which an electronic device according to an embodiment displays in different states distinguished by a shape of a flexible display.
FIG. 8 illustrates an exemplary flowchart for explaining an operation of an electronic device according to an embodiment.
FIG. 9 illustrates an exemplary flowchart for explaining an operation of an electronic device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

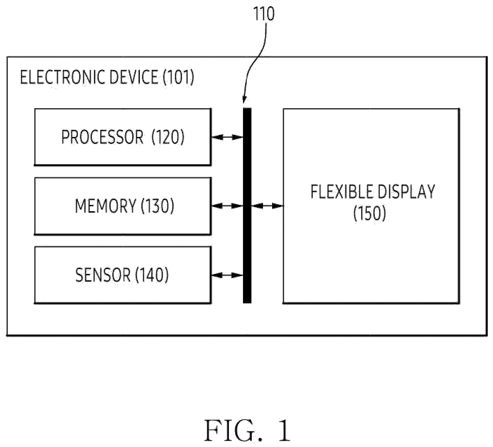

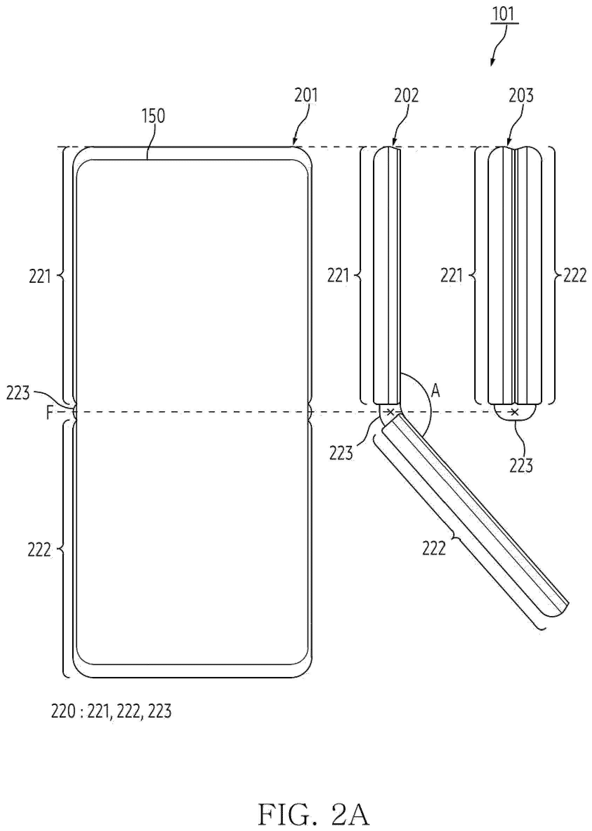

FIG. 1 is a block diagram of an electronic device 101 according to an embodiment. The electronic device 101 may include at least one of a processor 120, a memory 130, a sensor 140, or a flexible display 150. The processor 120, the memory 130, the sensor 140, and the flexible display 150 may be electronically and/or operably coupled with each other by an electronical component such as a communication bus 110. Hereinafter, different hardware (or circuitry) distinguished into blocks being operably coupled may mean a direct or an indirect connection between the hardware being established by wire or wirelessly, so that second hardware is controlled by first hardware among the hardware. Although illustrated based on different blocks, the embodiment is not limited thereto, and a plurality of hardware (e.g., combinations of the processor 120, the memory 130, and the sensor 140) may be included in a single integrated circuit such as a system on a chip (SoC). A type and/or the number of hardware components included in the electronic device 101 is not limited as illustrated in FIG. 1. An exemplary shape of the electronic device 101 including one or more hardware described with reference to FIG. 1 will be described with reference to FIGS. 2A to 2B.

The processor 120 of the electronic device 101 according to an embodiment may include hardware and/or circuitry for processing data based on one or more instructions. The hardware and/or the circuitry for processing data may include, for example, an arithmetic and logic unit (ALU), a floating point unit (FPU), a field programmable gate array (FPGA), a central processing unit (CPU), and/or an application processor (AP). The number of the processors 120 may be one or more. For example, the processor 120 may have a structure of a multi-core processor, such as a dual core, a quad core, or a hexa core.

The memory 130 of the electronic device 101 according to an embodiment may include a hardware component for storing data and/or instruction, inputted and/or outputted to the processor 120. The memory 130 may include, for example, volatile memory such as random-access memory (RAM), and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), an erasable PROM (EPROM), an electrically erasable PROM (EEPROM), flash memory, a hard disk, a compact disk, a solid state drive (SSD), and an embedded multi media card (eMMC).

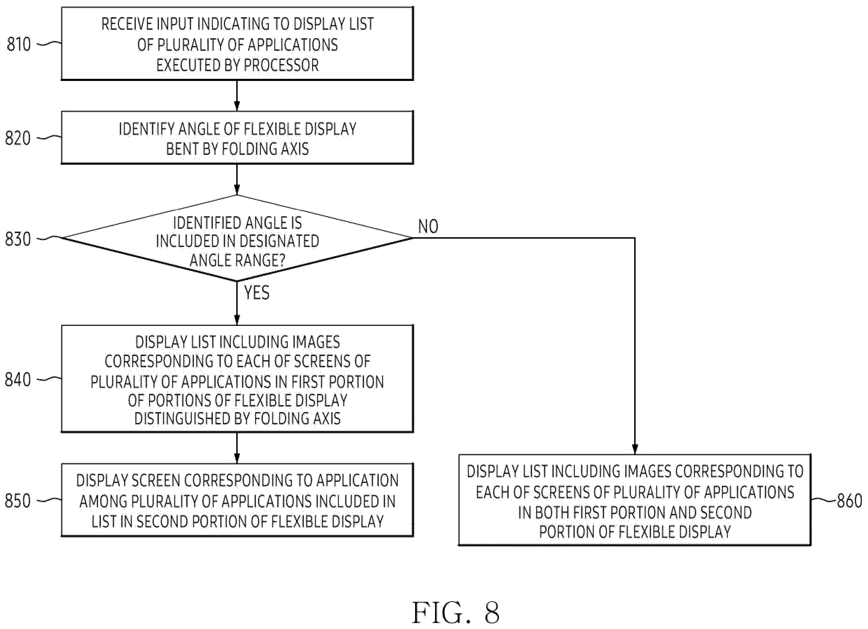

One or more instructions (or commands) indicating a calculation and/or an operation to be performed by the processor 120 on data may be stored in the memory 130. A set of the one or more instructions may be referred to as firmware, an operating system, a process, a routine, a subroutine and/or an application. For example, the electronic device 101 and/or the processor 120 may perform at least one of operations of FIGS. 8 to 9 when a set of a plurality of instructions distributed in a form of the operating system, the firmware, a driver, and/or the application is executed. Hereinafter, an installation of an application in the electronic device 101 may mean that one or more instructions provided in a form of the application is stored in the memory 130 of the electronic device 101, which means that the one or more applications are stored in an executable format (e.g., a file having an extension designated by the operating system of the electronic device 101) by the processor 120 of the electronic device 101. In an example in which a plurality of applications is installed in the electronic device 101, the processor 120 of the electronic device 101 may execute the plurality of applications substantially simultaneously based on multitasking.

The sensor 140 of the electronic device 101 may generate electronic information capable of being processed by the processor 120 and/or stored in the memory 130 from non-electronic information associated with the electronic device 101. In an embodiment in which the electronic device 101 includes a deformable housing and/or the flexible display 150, the sensor 140 of the electronic device 101 may include a sensor for measuring a posture and/or a shape of the housing and/or the flexible display 150. The sensor 140 of the electronic device 101 may include a Hall sensor including a pair of a magnetic and a magnetic field sensor that measures a change in the magnetic field formed by the magnet. The magnet and the magnetic field sensor may be positioned in different portions of the housing of the electronic device 101. Based on the change in the magnetic field measured by the magnetic field sensor, the Hall sensor may identify a distance between the portions. In an embodiment in which the electronic device 101 includes the deformable housing, the electronic device 101 may identify the shape of the housing using the Hall sensor including the magnet and the magnetic field sensor that are positioned in the different portions of the housing. For example, the Hall sensor may output sensor data indicating the distance and/or the shape of the housing. An example of an operation in which the electronic device 101 identifies the shape of the housing and/or the flexible display 150 using the sensor 140 will be described with reference to FIGS. 2A to 2B.

The sensor 140 included in the electronic device 101 is not limited to the Hall sensor described above. For example, the sensor 140 of the electronic device 101 may include an acceleration sensor, a geomagnetic sensor, a gyro sensor, or a combination thereof. The acceleration sensor, the geomagnetic sensor, the gyro sensor, or the combination thereof may be referred to as an inertia measurement unit (IMU). The acceleration sensor and the geomagnetic sensor may be included in the electronic device 101 to measure a physical movement (e.g., translation motion) of the electronic device 101. For example, the acceleration sensor may output sensor data indicating a direction and/or magnitude of acceleration (e.g., acceleration of gravity) applied to the electronic device 101 using a plurality of designated axes (e.g., x-axis, y-axis, and z-axis) perpendicular to each other. For example, the geomagnetic sensor may output sensor data indicating a direction of the magnetic field (e.g., a direction of the N pole) applied to the electronic device 101 using two-dimensional to three-dimensional axes. In order to measure rotation of the electronic device 101, the gyro sensor may be included in the electronic device 101. For example, the gyro sensor may output sensor data indicating a parameter (e.g., angular velocity) indicating the rotation of the electronic device 101 based on the axes.

The electronic device 101 may identify an orientation of the electronic device 101 based on data identified by the sensor 140. The orientation may be associated with the direction of the acceleration of gravity applied to the electronic device 101. Based on the identified orientation, the electronic device 101 may determine a mode of the electronic device 101 among a plurality of designated modes. For example, the electronic device 101 may identify a mode corresponding to the orientation among designated modes, which are the plurality of designated modes, including a landscape mode and a portrait mode.

For example, in case that the housing and/or the flexible display 150 of electronic device 101 have a width and a length, perpendicular to each other, the landscape mode may include a state in which an angle between the direction of the acceleration of gravity that is identified by data of the sensor 140 (e.g., the acceleration sensor) and a length direction of the electronic device 101 is included in a designated angle range including a right angle. In the above example, the portrait mode may include a state in which an angle between the direction of the acceleration of gravity that is identified by the data of the sensor 140 and a width direction of the electronic device 101 is included in the designated angle range including the right angle. In an embodiment, the plurality of designated modes, which is a different mode distinct from the landscape mode and the portrait mode, may further include, for example, a mode associated with the shape of the housing and/or the flexible display 150 of the electronic device 101 that are deformed by an external force.

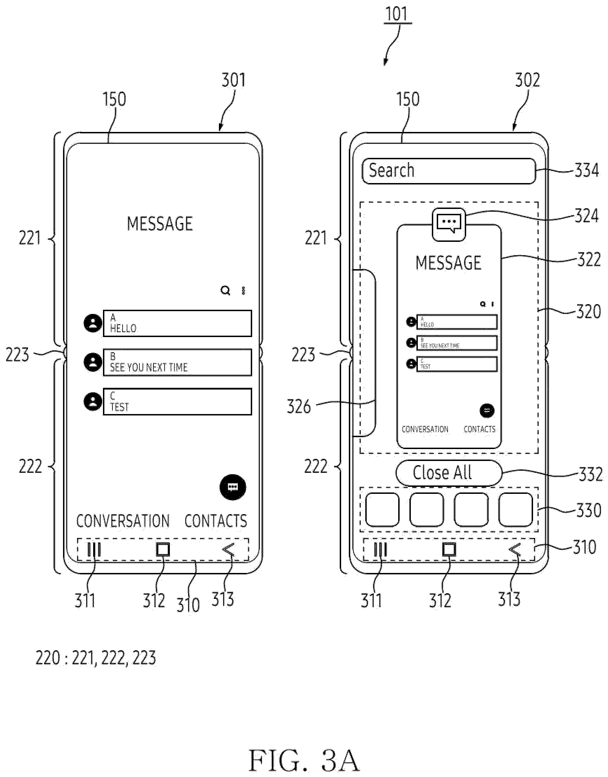

The flexible display 150 of the electronic device 101 according to an embodiment may output visualized information (e.g., at least one of screens of FIGS. 3A to 7) to a user. For example, the flexible display 150 may output the visualized information to the user, by being controlled by the processor 120. The flexible display 150 may at least partially include a flat panel display (FPD) and/or an electronic paper. The FPD may include a liquid crystal display (LCD), a plasma display panel (PDP), and/or one or more light emitting diodes (LEDs). The LED may include an organic LED (OLED).

The flexible display 150 of the electronic device 101 according to an embodiment may include a sensor (e.g., a touch sensor panel (TSP)) for detecting an external object (e.g., a finger of the user) on the flexible display 150. For example, based on the TSP, the electronic device 101 may detect an external object that contacts the flexible display 150 or floats on the flexible display 150. In response to detecting the external object, the electronic device 101 may execute a function associated with a specific visual object corresponding to a position of the external object on the flexible display 150 among visual objects being displayed in the flexible display 150.

In an embodiment in which the electronic device 101 includes a foldable housing based on a folding axis, the flexible display 150 may be deformed by the shape of the housing. For example, the flexible display 150 may be positioned across the folding axis of the housing on a surface of the housing. For example, in case that the housing is folded by the folding axis, the flexible display 150 may be folded by the folded housing.

The processor 120 of the electronic device 101 according to an embodiment may identify the posture and/or the shape of the housing and/or the flexible display 150 based on the data identified through the sensor 140. In a state where a screen is displayed in the flexible display 150, the processor 120 of the electronic device 101 may identify the data of the sensor 140. The processor 120 of the electronic device 101 may identify the shape of the flexible display 150 based on the identified data. Based on identifying that the shape of the flexible display 150 is included in a designated shape including the shape of the flexible display 150 folded by the folding axis, the processor 120 of the electronic device 101 may identify different portions of the flexible display 150 distinguished by the folding axis. Based on identifying the portions, the processor 120 may display a screen having a layout distinguished by the folding axis in the flexible display 150. An example of a screen in which the electronic device 101 displays based on the deformation of the flexible display 150 will be described with reference to FIGS. 3A to 7.

Although not illustrated, the electronic device 101 according to an embodiment may include an output means for outputting information in a form other than the visualized form. For example, the electronic device 101 may include a speaker for outputting an acoustic signal. For example, the electronic device 101 may include a motor for providing haptic feedback based on vibration.

As described above, the electronic device 101 according to an embodiment may display a screen dependent on the shape of the flexible display 150 in the flexible display 150. The screen may include a designated screen for switching between a plurality of applications executed by the processor 120. For example, the electronic device 101 may identify whether the flexible display 150 has the designated shape folded by the folding axis, based on the data of the sensor 140. In a state of identifying that the flexible display 150 has the designated shape, the electronic device 101 may display a first screen corresponding to a specific application executed by the processor 120 in a first portion of the different portions of the flexible display 150 distinguished by the folding axis. In the state of displaying the first screen in the first portion, the electronic device 101 may display a second screen in a second portion different from the first portion among the portions, including a list of the plurality of applications being executed by the processor 120 based on multitasking which includes the specific application. Based on the first screen displayed in the first portion and the second screen displayed in the second portion, the electronic device 101 may display a user interface (UI) suitable for the flexible display 150 folded by the folding axis.

Hereinafter, an example of a form factor of the electronic device 101 including the flexible display 150 of FIG. 1 will be described with reference to FIGS. 2A to 2B.

FIGS. 2A to 2B illustrate an example of different states 201, 202 and 203 of a housing 220 and/or a flexible display 150 of an electronic device 101 according to an embodiment. The electronic device 101 of FIGS. 2A to 2B may be an example of the electronic device 101 of FIG. 1. For example, the electronic device 101 and the flexible display 150 of FIG. 1 may include the electronic device 101 and the flexible display 150 of FIGS. 2A to 2B. Referring to FIGS. 2A to 2B, the electronic device 101 may be a terminal. The terminal may include, for example, a personal computer (PC), such as a laptop and desktop, a smartphone, a smartpad, and/or a tablet PC. The embodiment is not limited to the above example, and the terminal may include a smart accessory such as a smartwatch and/or a head-mounted device (HMD).

Referring to FIGS. 2A to 2B, a deformable housing 220 of the electronic device 101 according to an embodiment may have a structure capable of being folded by a folding axis F. The housing 220 may be distinguished into a hinge assembly 223 including the folding axis f, a first housing 221 and a second housing 222 that are coupled to the hinge assembly 223. The hinge assembly 223 may be foldably coupled to the first housing 221 and the second housing 222 through each of different surfaces.

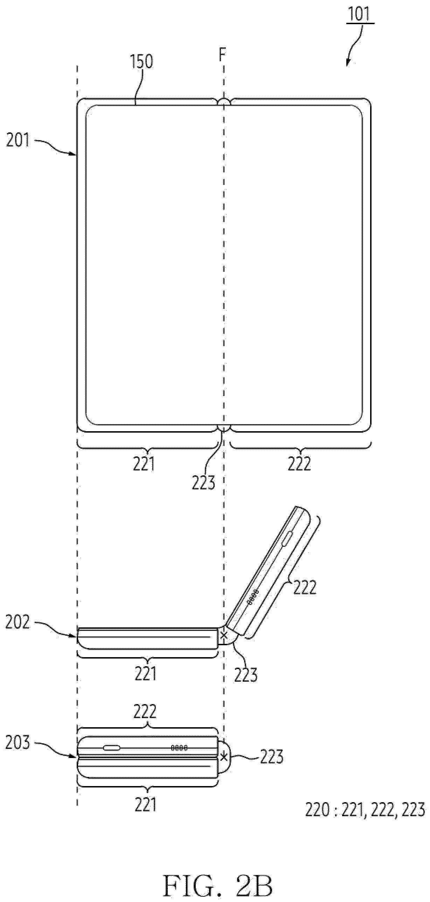

Referring to FIGS. 2A to 2B, different form factors of the electronic device 101 distinguished by a direction of the folding axis f in the housing 220 will be illustrated. The flexible display 150 in the electronic device 101 may have a rectangular shape including a width and a height. Referring to FIG. 2A, an embodiment in which the flexible display 150 has the height exceeding the width, and the folding axis f is formed along a direction parallel to the width will be illustrated. Referring to FIG. 2B, an embodiment in which the folding axis f is formed along another direction parallel to the height will be illustrated. The flexible display 150 may be positioned in all of a surface of the first housing 221 and a surface of the second housing 222, across the hinge assembly 223. A single plane may be formed by a surface of the first housing 221 and a surface of the second housing 222 in which the flexible display 150 is positioned. The single plane may be referred to as a front surface of the electronic device 101 and/or the housing 220. Another surface of the electronic device 101 and/or of the housing 220, which is opposite to the front surface, may be referred to as a rear surface.

The electronic device 101 according to an embodiment may include a sensor (e.g., the sensor 140 of FIG. 1) for identifying a shape of the housing 220 and/or of the flexible display 150 that are capable of being folded by the folding axis f. For example, as a Hall sensor is included in the hinge assembly 223, the electronic device 101 may use the Hall sensor to identify an angle A of the flexible display 150 bent by the folding axis f. In the above example, the Hall sensor may output sensor data used to identify the angle associated with the folding axis f. For example, IMU sensors may be included in each of the first housing 221 and the second housing 222. In the above example, the electronic device 101 may identify a first direction of acceleration of gravity applied to the first housing 221, based on data of a first IMU sensor in the first housing 221. In the above example, the electronic device 101 may identify a second direction of the acceleration of gravity applied to the second housing 222, based on data of a second IMU sensor in the second housing 222. Each of the first IMU sensor and the second IMU sensor may output sensor data indicating a direction of the acceleration of gravity applied to a housing in which the IMU sensor is positioned, based on designated axes (e.g., x-axis, y-axis, and/or z-axis).

For example, based on an IMU sensor included in the first housing 221 and the Hall sensor included in the hinge assembly 223, the electronic device 101 may identify the first direction of a first portion of the flexible display 150 positioned on the first housing 221, and the angle A of the flexible display 150 bent by the folding axis f. In the above example in which the electronic device 101 identifies the first direction and the angle A using a sensor, the electronic device 101 may obtain the second direction of the second portion of the flexible display 150 positioned on the second housing 222, based on the first direction and the angle A.

In an embodiment, a state of the electronic device 101 may be distinguished by the shape of the housing 220 and/or the flexible display 150, identified based on the sensor. Referring to FIGS. 2A to 2B, the different states 201, 202 and 203 of the electronic device 101 distinguished by the angle A of the housing 220 and/or the flexible display 150, bent by the folding axis f will be illustrated. The angle A may be identified based on data identified by the sensor of the electronic device 101. The electronic device 101 according to an embodiment may identify a designated state corresponding to the state of the electronic device 101 among designated states, based on a result of comparing the angle A and designated angle ranges. In terms of the shape and/or a posture of the housing 220 and/or flexible display 150, the designated states may be referred to as designated shapes, and/or designated posture, or may be referred to as designated modes.

In an embodiment, the designated angle ranges compared to the angle A of the housing 220 and/or the flexible display 150 that are bent by the folding axis F may include a first designated angle range (e.g., a range including an angle greater than or equal to 131 ° and less than or equal to 180 °) including a straight angle (e.g., 180 °). The designated angle ranges may include a second designated angle range (e.g., a range including an angle between 70 ° to 130 °) that is different from the first designated angle range, and includes a right angle (e.g., 90 °). The designated angle ranges may include a third designated angle range (e.g., a range including an angle between 0 ° to 70 °) that is different from the first designated angle range to the second designated angle range, and includes 0 °.

The state of the electronic device 101 may be distinguished by a designated angle range including the angle A and/or a state of the flexible display 150. For example, a state (e.g., the state 201 of FIGS. 2A to 2B) in which the electronic device 101 identifies the angle A included in the first designated angle range may be referred to as an unfolded state (or an unfolding state), a fully open state, an opened state, and/or a straight angle state. For example, a state (e.g., the state 202 of FIGS. 2A to 2B) in which the electronic device 101 identifies the angle A included within the second designated angle range may be referred to as a sub-folded state (or a sub-unfolding state), a sub-closed state, a sub-unfolded state, a partially open state, a sub-opened state, and/or a flex state (or a flex mode). For example, a state (e.g., the state 203 of FIGS. 2A to 2B) in which the electronic device 101 identifies the angle A included in the third designated angle range may be referred to as a folded state (or a folding state), a fully closed state, and/or a closed state. Referring to FIGS. 2A to 2B, in the state 203 referred to as the folded state, the flexible display 150 may be fully occluded by the housing 220 of the electronic device 101. In terms of being occluded in the folded state, the flexible display 150 may be referred to as an inner display.

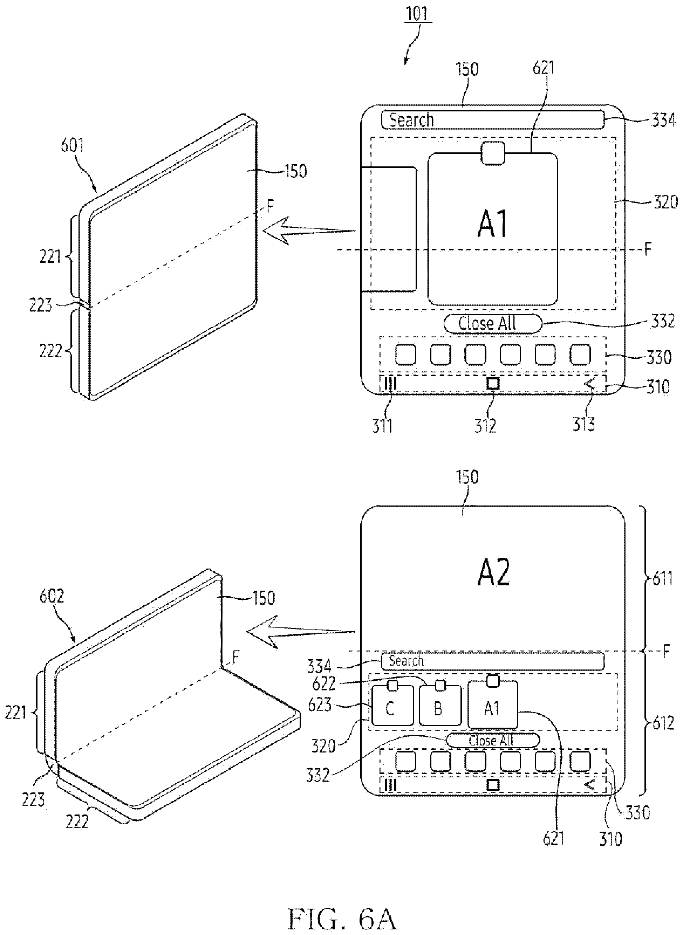

The electronic device 101 according to an embodiment may display a screen suitable for the flexible display 150 bent by the folding axis f in the flex state including the state 202 of FIGS. 2A to 2B. The screen may include a list of applications executed by the electronic device 101. The electronic device 101 may display the list in a different portion from a portion of the flexible display 150 bent by the folding axis f within the screen. For example, the electronic device 101 may display the list, so that the list is not distorted by the portion of the flexible display 150 bent by the folding axis f. An operation in which the electronic device 101 having the form factor illustrated in FIG. 2A displays the list in the flexible display 150 will be described with reference to FIGS. 3A to 5B. An operation in which the electronic device 101 having the form factor illustrated in FIG. 2B displays the list in the flexible display 150 will be described with reference to FIGS. 6A to 7.

Hereinafter, an example of an operation in which the electronic device 101 according to an embodiment displays at least a portion of a screen displayed in a flexible display 152 through a cover display 154 will be described with reference to FIGS. 3A to 3B.

FIGS. 3A to 3B illustrate an example of screens in which an electronic device 101 according to an embodiment displays in states 301, 302, and 303 associate with a shape of a flexible display 150. The electronic device 101 of FIGS. 3A to 3B may be an example of the electronic device 101 of FIG. 1 and/or FIGS. 2A to 2B. For example, the electronic device 101 and the flexible display 150 of FIG. 1 may include the electronic device 101 and the flexible display 150 of FIGS. 3A to 3B. Referring to FIGS. 3A to 3B, an embodiment of the electronic device 101 having a structure based on the housing 220 of FIG. 2A will be illustrated.

The electronic device 101 according to an embodiment may display at least one screen corresponding to at least one application, based on a display region in the flexible display 150. Hereinafter, a screen may mean a user interface (UI) displayed within at least a portion of the flexible display 150. The screen may include, for example, activity of an Android operating system. Referring to FIG. 3A, the exemplary state 301 in which the electronic device 101 displays a screen corresponding to a messenger application in the display region will be illustrated. Although an operation of the electronic device 101 based on the state 301 in which the screen based on execution of the messenger application is displayed is described, the embodiment is not limited thereto. For example, an operation of the electronic device 101, which is described later based on the state 301 with respect to another application that is different from the messenger application and installed in the electronic device 101, may be performed. The other application may include, for example, a video streaming application for streaming a video, a web browser application for browsing a web page, and/or a launcher application for executing at least one of a plurality of applications installed in the electronic device 101.

Referring to the state 301 of FIG. 3A, while executing an application such as the messenger application, the electronic device 101 may display a screen (e.g., activity) corresponding to the messenger application in the flexible display 150. The number of simultaneously executable applications by the electronic device 101 may be one or more. For example, despite displaying a screen corresponding to a single application, such as the state 301 in the flexible display 150, a plurality of applications including the application corresponding to the screen may be executed by a processor (e.g., the processor 120 of FIG. 1) of the electronic device 101. In the above example, at least one application corresponding to at least one screen visible to a user through the flexible display 150 may be distinguished as a foreground application, and other applications different from the foreground application may be distinguished as a background application among the plurality of applications executed by the processor.

Referring to FIG. 3A, the electronic device 101 may display visual objects 311, 312, and 313 for controlling execution of an application in a portion 310 of the flexible display 150 along with a screen based on the execution of the messenger application. Although the visual objects 311, 312, and 313 having a form of an icon based on one or more lines are illustrated, the embodiment is not limited thereto. The portion 310 in the flexible display 150 may be controlled by a system application different from the messenger application. In an embodiment, the portion 310 including the visual objects 311, 312, and 313, may be referred to as a navigation bar. In the state 301, based on an application programming interface (API) called by the execution of the messenger application, the electronic device 101 may control displaying of the navigation bar based on the system application.

The electronic device 101 according to an embodiment may map different functions associated with switching of the screen displayed through the flexible display 150 to each of the visual objects 311, 312, and 313 displayed in the portion 310. For example, the visual object 313 may correspond to a function for switching to another screen that was displayed in the flexible display 150 before a screen displayed in the flexible display 150 in the current state (e.g., the state 301). In terms of switching to the other screen displayed before the screen of the current state, the visual object 313 may be referred to as a back button. For example, the visual object 312 may correspond to a function for switching to a designated screen (e.g., a launcher screen, and/or a home screen) provided by a designated application (e.g., a launcher application, and/or a home application) installed in electronic device 101. The designated screen may include a list of all the plurality of applications installed in the electronic device 101. The visual object 312 may be referred to as a home button.

The electronic device 101 according to an embodiment may match a function for displaying the list of the applications executed by the processor of the electronic device 101 to the visual object 312. The applications executed by the processor of the electronic device 101 may include one or more background applications and at least one foreground application such as the messenger application in the state 301, among the plurality of applications installed in the electronic device 101. In terms of an overview of the applications executed by the processor, the visual object 312 may be referred to as an overview button. Based on the execution of the function matched to the visual object 312, the electronic device 101 may display a designated screen including the list in the flexible display 150. Since the designated screen is displayed based on the visual object 312 referred to as the overview button, the designated screen may be referred to as an overview screen. Since the list includes applications recently executed by the user among the applications installed in the electronic device 101, the designated screen may be referred to as a recents screen (or a recents UI, recents apps, recents pages, and/or a recents task list).

Referring to FIG. 3A, in response to an input indicating to select the visual object 312 in the state 301, the electronic device 101 may switch from the state 301 to the state 302. For example, the electronic device 101 may identify the input, based on a gesture of touching and/or clicking the visual object 312. The input indicating to select the visual object 312 may include an input indicating to display the list of the plurality of applications executed by the processor of the electronic device 101 in the flexible display 150. The electronic device 101 identifying the input may display a designated screen (e.g., the overview screen) corresponding to the visual object 311 in the flexible display 150 based on the state 302. The screen of the electronic device 101 in the state 302 of FIG. 3A may include the designated screen.

In the exemplary state 302 of FIG. 3A, the electronic device 101 may display the designated screen together with the navigation bar displayed through the portion 310 in the flexible display 150. In response to an input indicating to select the visual object 313 in the state 302, the electronic device 101 may switch to the state 301 prior to displaying the designated screen of the state 302. In response to the input indicating to select the visual object 312 in the state 302, the electronic device 101 may display another designated screen (e.g., the launcher screen) that is different from the designated screen displayed in the flexible display 150, and corresponds to the visual object 312. Since the state 302 is a state of displaying the designated screen corresponding to the visual object 311, an input indicating to select the visual object 311 in the state 302 may be neglected by the electronic device 101. For example, in the state 302, the electronic device 101 may deactivate the visual object 311 and/or may refrain from responding to the input indicating to select the visual object 311.

Referring to FIG. 3A, in the state 302 in which the designated screen corresponding to the visual object 311 is displayed, the electronic device 101 may display the list of the plurality of applications based on the designated screen in a portion 320 of the flexible display 150. The electronic device 101 may display another list referred to as a hotseat (or recommended apps) in a portion 330 of the flexible display 150, together with the list displayed in the portion 320. The other list including one or more applications designated by the user may be commonly displayed on the designated screen in the state 302, and the launcher screen corresponding to the visual object 312. The electronic device 101 may display one or more icons representing the one or more applications included in the other list in the portion 330. The electronic device 101 may display a visual object 332 for receiving an input for terminating all the plurality of applications associated with the list in the flexible display 150, together with the list displayed in the portion 320. The visual object 332 may have a form of a button including designated text (e.g., "close all") that guides the termination of all the plurality of applications included in the list displayed through the portion 320. In response to an input indicating to select the visual object 332, the electronic device 101 may terminate all the plurality of applications. Terminating the application may include an operation of ceasing the processor of the electronic device 101 from executing an instruction associated with the application. Terminating the application may include an operation of removing a plurality of instructions associated with the application from volatile memory of the electronic device 101. Since all the plurality of applications are terminated, the list displayed through the portion 320 may be reset (or initialized). The electronic device 101 may display a visual object 334 for receiving text in the flexible display 150, together with the list displayed in the portion 320. The visual object 334 may have a form of a text box. The electronic device 101 receiving the text through the visual object 334 may execute a search function based on the received text. Based on execution of the search function, the electronic device 101 may identify at least one application having a name (e.g., a package name) including the received text among the plurality of applications included in the list displayed in the portion 320. Based on the execution of the search function, the electronic device 101 may display a result of identifying the at least one application in the flexible display 150.

In the state 302 of FIG. 3A, the electronic device 101 may visualize the list of the plurality of applications executed by the processor of the electronic device 101 in the portion 320, based on a plurality of images including an image 322. For example, in response to the input indicating to select the visual object 311, the electronic device 101 may obtain a plurality of images corresponding to each of the plurality of applications executed by the processor of electronic device 101. For example, the electronic device 101 may obtain a plurality of images corresponding to each of screens of the plurality of applications.

Referring to FIG. 3A, an example in which the electronic device 101 that has identified the input indicating to select the visual object 311 in the state 301 displays the image 322 corresponding to a screen of the messenger application executed in the state 301 in the portion 320 will be illustrated. Referring to the image 322 of the state 302 and the screen displayed in the flexible display 150 in the state 301, the image 322 in which the electronic device 101 displays in the state 302 may include a screen shot of the messenger application executed by the processor of the electronic device 101. For example, the electronic device 101 may display images 322 and 326 including screen shots of the plurality of applications executed by the processor of the electronic device 101 in the portion 320. For example, the image 326 partially displayed in the state 302 may include a screen shot of another application (e.g., the background application) different from the messenger application. For example, in response to the input, the electronic device 101 may obtain the images 322 and 326 representing the screens of the plurality of applications executed by the processor, based on an aspect ratio of a display region of the flexible display 150. The display region may include a first portion of the flexible display 150 positioned on a first housing 221 and a second portion of the flexible display 150 positioned on a second housing 222. The electronic device 101 may display an icon 324 representing an application (e.g., the messenger application) corresponding to the image 322 together with the image 322 in the portion 320. Referring to FIG. 3A, the electronic device 101 may display the icon 324 and the image 322 as a group representing the messenger application included in the list, in the portion 320.

In the state 302 of FIG. 3A, the electronic device 101 may display whether applications corresponding to each of images 320 and 326 correspond to one of the foreground application and the background application based on a size of the images 320 and 326 displayed in the portion 320. In the state 302 in which the messenger application corresponding to the image 322 is the foreground application, the electronic device 101 may display the image 322 within a size larger than the size of the image 326.

In the state 302 of FIG. 3A, the electronic device 101 may identify an input associated with the list of the plurality of applications executed by the processor of the electronic device 101 based on the portion 320 of the flexible display 150. The electronic device 101 may identify the input based on a touch gesture performed on the portion 320 of the flexible display 150. For example, based on a touch gesture (e.g., a horizontal swipe gesture, and/or a horizontal scroll gesture) that is dragged along a width direction among the width direction and a height direction of the flexible display 150 on the portion 320, the electronic device 101 may move the images 322 and 326 displayed in the portion 320 and corresponding to each of the plurality of applications. Based on the movement of the images 322 and 326, the electronic device 101 may perform horizontal scrolling of the list. In the state 302 of FIG. 3A in which the image 322 is grouped with the icon 324, the electronic device 101 may move the icon 324 together with the images 322 and 326 in the portion 320. In the above example, the touch gesture may be identified as an input for navigating the list of the plurality of applications.

For example, based on a touch gesture (e.g., a vertical swipe gesture) that is dragged along the height direction among the width direction and the height direction of the flexible display 150 on the portion 320, the electronic device 101 may terminate an application corresponding to an image overlapping a point in the portion 320 where the touch gesture is initiated. Based on the touch gesture, the electronic device 101 may display an animation (e.g., fade-out) in which the image overlapped with the point disappears along a direction of the touch gesture. In case that the image 322 is dragged by the touch gesture, the electronic device 101 may terminate the messenger application corresponding to the image 322.

For example, the electronic device 101 may display an application corresponding to the image in the flexible display 150, based on a touch gesture (e.g., a tap gesture) tapping an image to be displayed in the portion 320. In the state 302, in response to identifying the tap gesture performed on the image 322, the electronic device 101 may switch to a state (e.g., the state 301) of displaying a screen corresponding to the messenger application matched to the image 322. In the state 302, in response to identifying the tap gesture performed on the image 326, the electronic device 101 may switch to another state matching the image 326 and displaying a screen corresponding to another application different from the messenger application.

The electronic device 101 according to an embodiment may identify data of one or more sensors (e.g., the sensor 140 of FIG. 1) in the state 302 of displaying a designated screen including the list of the plurality of applications executed by the processor of the electronic device 101. For example, the electronic device 101 may identify the data associated with a shape of the housing 220 and/or the flexible display 150. The electronic device 101 may identify an angle of the flexible display 150 bent by a folding axis. Based on the one or more sensors, the electronic device 101 may identify the angle of the flexible display 150 that is foldable by the folding axis. For example, in response to an input indicating to display the list in the flexible display 150, such as the input indicating to select the visual object 311 displayed in the state 301, the electronic device 101 may identify the angle of the flexible display 150 bent by the folding axis based on the identified data. The states 301 and 302 of FIG. 3A may be exemplary states in which the electronic device 101 displays the designated screen based on the angle included in a designated angle range (e.g., the first designated angle range of FIGS. 2A to 2B) including a straight angle.

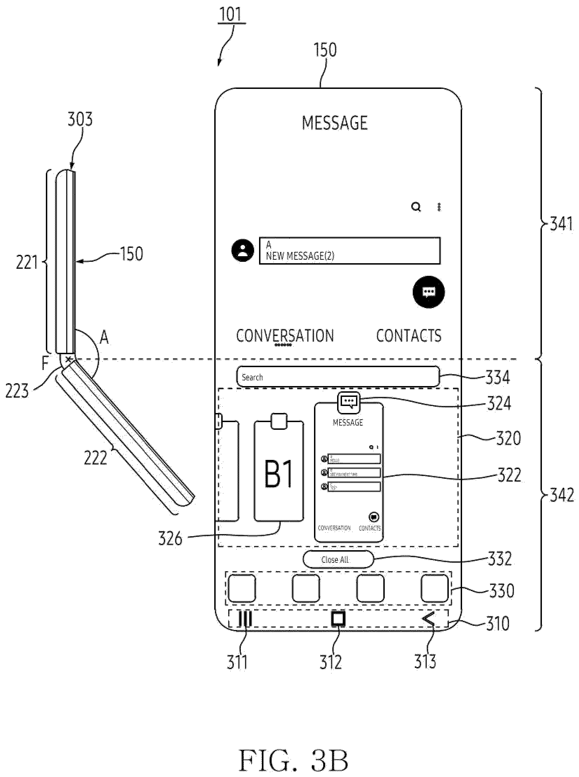

The electronic device 101 according to an embodiment may adaptively change a screen (e.g., an overview screen displayed by the electronic device 101 in the state 302) including the list of the plurality of applications executed by the processor of the electronic device 101 to the shape of the flexible display 150 on which the screen is displayed. Referring to FIG. 3B, the exemplary state 303 in which the electronic device 101 displays the screen is illustrated based on identifying an angle A of the flexible display 150 included in a designated angle range (e.g., the second designated angle range of FIGS. 2A to 2B) based on the one or more sensors (e.g., the sensor 140 of FIG. 1) in the electronic device 101. For example, in the state 302 of FIG. 3A, the electronic device 101 may switch from the state 302 of FIG. 3A to the state 303 of FIG. 3B, based on identifying that the angle A changes to the second designated angle range corresponding to a flex state.

In the state 303 in which the flexible display 150 is folded by the folding axis F, the flexible display 150 may be distinguished into a first portion 341 and a second portion 342 by the folding axis F. Referring to FIG. 3B, the first portion 341 may include a portion of the flexible display 150 positioned on the first housing 221, and the second portion 342 may include another portion of the flexible display 150 positioned on the second housing 222. In the state 303, the electronic device 101 may display the list of the plurality of applications executed by the processor of the electronic device 101 based on the plurality of images 322 and 326 in the second portion 342. In the state 303, the electronic device 101 may display a screen corresponding to a first application, which is the foreground application (e.g., the messenger application), among the plurality of applications in the first portion 341.

Referring to FIG. 3B, the electronic device 101 according to an embodiment may display an overview screen in the second portion 342 including a lower end of the flexible display 150, based on a portrait mode among the first portion 341 and the second portion 342 of the flexible display 150 distinguished by the folding axis F. The lower end of the flexible display 150 may be selected from among peripheries of the flexible display 150 based on a direction of acceleration of gravity identified based on a sensor. For example, the lower end of the flexible display 150 may be a periphery having the closest distance to the ground among the peripheries.

The electronic device 101 according to an embodiment may select a portion of the flexible display 150 on which the overview screen is to be displayed from among the first portion 341 and the second portion 342 based on data identified by the sensor. For example, the electronic device 101 including IMU sensors positioned in each of the first housing 221 and the second housing 222 may identify a first direction of the acceleration of gravity applied to the first housing 221, and a second direction of the acceleration of gravity applied to the second housing 222, based on the IMU sensors. The electronic device 101 may select the portion on which the list is to be displayed based on whether each of the first direction and the second direction corresponds to a direction of the first portion 341 and a direction of the second portion 342. In the state 303 in which the second direction of the acceleration of gravity applied to the second housing 222 is parallel to the direction of the second portion 342, the electronic device 101 may select the second portion 342 as the portion on which the overview screen is to be displayed.

In the state 303, a designated screen including the list of applications executed by the processor of the electronic device 101 may be selectively displayed in the second portion 342. While switching from the state 302 of FIG. 3A to the state 303 of FIG. 3B, the electronic device 101 may reproduce an animation of reducing a size of the overview screen displayed on an entire display region of the flexible display 150 in the state 302, or reducing an aspect ratio of the overview screen. The portion 320 displayed based on the second portion 342 in the state 303, and the images 322 and 326, the icon 324, the portion 330, and the visual objects 332 and 334 in the portion 320, may respectively correspond to the portion 320 displayed based on an entire display region of the flexible display 150 in the state 302 of the FIG. 3A, and the images 322 and 326, the icon 324, the portion 330, and the visual objects 332 and 334 in the portion 320.

In the state 303 of FIG. 3B, a screen corresponding to the foreground application (e.g., the messenger application) included in the list of the plurality of applications executed by the processor of the electronic device 101 may be displayed through the first portion 341. Since the screen corresponds to the foreground application included in the list, all of an image (e.g., the image 322) in the list displayed through the second portion 342 and the screen displayed through the first portion 341 may correspond to the foreground application. Referring to FIG. 3B, the image 322 displayed based on the list is a screen shot representing a screen of the foreground application in a time point of receiving an input for displaying the designated screen including the list, so it may correspond to the foreground application and may be different from the screen displayed through the first portion 341. For example, an aspect ratio of the screen in the first portion 341, corresponding to the foreground application and an aspect ratio of the image 322 may be different. For example, content included in the screen in the first portion 341 may be different from content in the time point represented by the image 322. For example, the screen displayed through the first portion 341 may include content updated by execution of the foreground application after the time point when the image 322 was obtained.

Referring to FIG. 3B, in the state 303 of displaying a reduced overview screen based on the second portion 342, the electronic device 101 may identify an input based on a touch gesture performed on the portion 320, similar to the operation described with reference to the state 302 of FIG. 3A. For example, based on a horizontal swipe gesture performed on the portion 320 in the state 303, the electronic device 101 may perform horizontal scrolling of the images 322 and 326 based on the portion 320. For example, based on a vertical swipe gesture performed on the portion 320 in the state 303, the electronic device 101 may terminate a specific application corresponding to a specific image in which the vertical swipe gesture is initiated.

In an embodiment, based on a touch gesture (e.g., a tap gesture) of tapping a specific image in the portion 320, the electronic device 101 may display a screen corresponding to an application matched to the specific image in the first portion 341 different from the second portion 342 in which the portion 320 is displayed, among portions distinguished by the folding axis F. In the state 303 of FIG. 3B, based on a touch gesture performed on the image 326 corresponding to another application different from the foreground application displayed through the first portion 341, the electronic device 101 may display another screen corresponding to the other application associated with the image 326 in the first portion 341. Based on the touch gesture, the electronic device 101 may obtain the other screen based on the size of the first portion 341 based on the execution of the other application associated with the image 326, independently of the image 326 having the aspect ratio of the display region of the flexible display 150. In order to display the other screen in the first portion 341, the electronic device 101 may cease displaying the screen corresponding to the foreground application associated with the image 322 in the first portion 341.

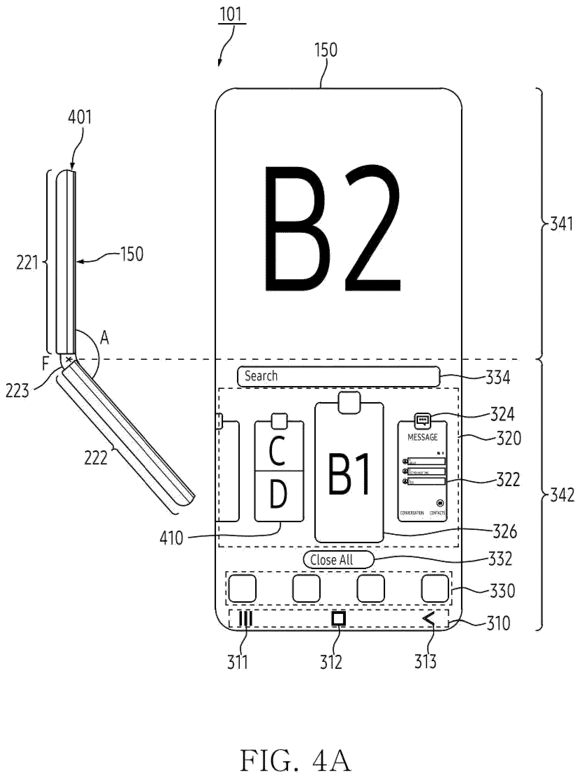

Hereinafter, an operation performed by the electronic device 101 in response to an input indicating to select the image 326 in the state 303 will be described with reference to FIGS. 4A to 4B. The input may be performed by the user to display a screen corresponding to a second application different from a first application displayed through the first portion 341, in the first portion 341.

FIGS. 4A to 4B illustrate an example of an operation in which an electronic device 101 according to an embodiment changes a screen displayed in a flexible display 150, based on a change in a shape of the flexible display 150. The electronic device 101 of FIGS. 4A to 4B may be an example of the electronic device 101 of FIG. 1, FIGS. 2A to 2B, and/or FIGS. 3A to 3B. For example, the electronic device 101 and the flexible display 150 of FIG. 1 may include the electronic device 101 and the flexible display 150 of FIGS. 4A to 4B. A housing 220 of the electronic device 101 of FIGS. 4A to 4B may have a structure corresponding to the housing 220 of FIG. 2A.

A state 401 of FIG. 4A may be an exemplary state of the electronic device 101 switched by an input indicating to select an image 326 from the state 303 of FIG. 3B. In the state 303 of FIG. 3B which was displaying a first screen corresponding to a first application matched to an image 322 in a first portion 341, in response to the input, the electronic device 101 may display a second screen B2 corresponding to a second application matched to the image 326 in the first portion 341. Based on the input, the electronic device 101 may enlarge a size of the image 326 including a screen shot B1 associated with the second application to a size larger than that of other images displayed in a portion 320. Based on the input, the electronic device 101 may reduce a size of the image 322 including a screen shot associated with the first application to a size less than a size (e.g., the size of the image 322 in the state 303 of FIG. 3B) before receiving the input. Referring to FIG. 4A, the electronic device 101 may reduce the size of the image 322 to less than the size of the image 322 selected by the input. Based on the input, the electronic device 101 may perform horizontal scrolling on the portion 320 such that the image 326 selected by the input is positioned on a center point of the portion 320. Based on the horizontal scrolling, the images 322 and 326 may be moved in the portion 320. For example, the state 401 of FIG. 4A may correspond to a time point after the electronic device 101 identifying the input in the state 303 of FIG. 3B, moves the image 326 in the portion 320 while enlarging the image 326 selected by the input.

Referring to FIG. 4A, the second screen B2, and the screen shot B1 included in the image 326 may represent different states of the second application in different time points. For example, the screen shot B1 may represent a first state of the second application at a first time point when receiving an input (e.g., an input indicating to select a visual object 311) for displaying a designated screen (e.g., an overview screen) including a list of a second portion 342. For example, the second screen B2 may represent a second state of the second application at a second time point (e.g., the current time point) after the first time point. Referring to FIG. 4A, the second screen B2 may have an aspect ratio of the first portion 341, and the screen shot B1 represented by the image 326 may have an aspect ratio of an entire display region of the flexible display 150 including the first portion 341 and the second portion 342.

The electronic device 101 may simultaneously display screens corresponding to an application executed based on multitasking (or multi-window) in the flexible display 150. While the electronic device 101 substantially simultaneously executes a plurality of applications, screens corresponding to the plurality of applications may occupy different regions of the flexible display 150. Referring to FIG. 4A, an image 410 may include a screen shot corresponding to an exemplary state of the flexible display 150 in which the screens corresponding to the plurality of applications are simultaneously displayed. The electronic device 101 according to an embodiment may display the image 410 corresponding to the applications simultaneously displayed based on the multi-window in a list displayed through the portion 320. In response to an input indicating to select the image 410, the electronic device 101 may display the screens corresponding to the plurality of applications matched to the image 410 in the first portion 341. An arrangement of the screens displayed in the first portion 341 may be matched to an arrangement of screens represented by the image 410.

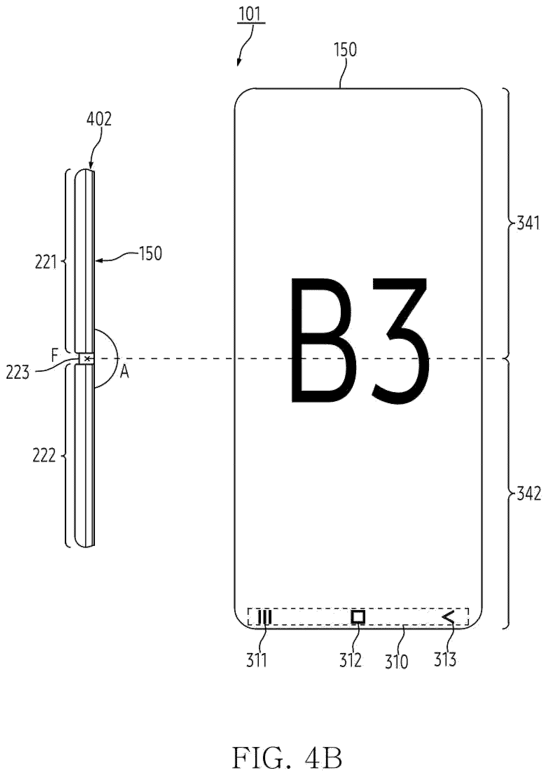

The electronic device 101 according to an embodiment may identify an angle A based on data of a sensor (e.g., the sensor 140 of FIG. 1) in a state (e.g., the state 401 of FIG. 4A) in which a list of a plurality of applications executed by a processor of the electronic device 101 is displayed based on the portion 320. Referring to FIGS. 4A to 4B, based on identifying that the identified angle A is changed to another angle range (e.g., the first designated angle range of FIGS. 2A to 2B, corresponding to an unfolded state) that exceeds an angle range (e.g., the second designated angle range of FIGS. 2A to 2B) corresponding to a flex state, the electronic device 101 may control the entire display region of the flexible display 150 based on an application corresponding to the first portion 341. For example, in the state 401 of FIG. 4A, the electronic device 101 may switch to a state 402 of FIG. 4B based on identifying that the angle A is changed to the first designated angle range corresponding to the unfolded state.

Based on switching from the state 401 of FIG. 4A to the state 402 of FIG. 4B, the electronic device 101 may at least temporarily cease displaying a designated screen (e.g., the overview screen) including the list of the plurality of applications executed by the processor of the electronic device 101, through the second portion 342. Based on switching from the state 401 of FIG. 4A to the state 402 of FIG. 4B, the electronic device 101 may generate a third screen B3 to be displayed through all the first portion 341 and the second portion 342 by using the second application matched to the second screen B2 in the state 401. For example, the electronic device 101 may obtain the third screen B3 based on a size including the first portion 341 and the second portion 342. In the state 402 of FIG. 4B, the electronic device 101 may display the third screen B3 corresponding to the second application in all the first portion 341 and the second portion 342 of the flexible display 150. While switching from the state 401 of FIG. 4A to the state 402 of FIG. 4B, the electronic device 101 may display an animation indicating a transition between the second screen B2 and the third screen B3.

As described above, the electronic device 101 according to an embodiment may change a size of the overview screen based on the shape of the flexible display 150 foldable by a folding axis F. The electronic device 101 may identify deformation of the flexible display 150 based on the angle A. In case of identifying a portion bent by the folding axis F in the deformed flexible display 150, the electronic device 101 may move the overview screen to another portion (the second portion 342 in the exemplary state 401 of FIG. 4A) different from the portion so that the overview screen is not distorted by the portion. Based on the movement of the overview screen, the electronic device 101 may display a screen (the second screen B2 in the exemplary state 401 of FIG. 4A) corresponding to a specific application selected based on the overview screen in another portion (the first portion 341 in the exemplary state 401 of FIG. 4A) different from the other portion of the flexible display 150 in which the overview screen is displayed.

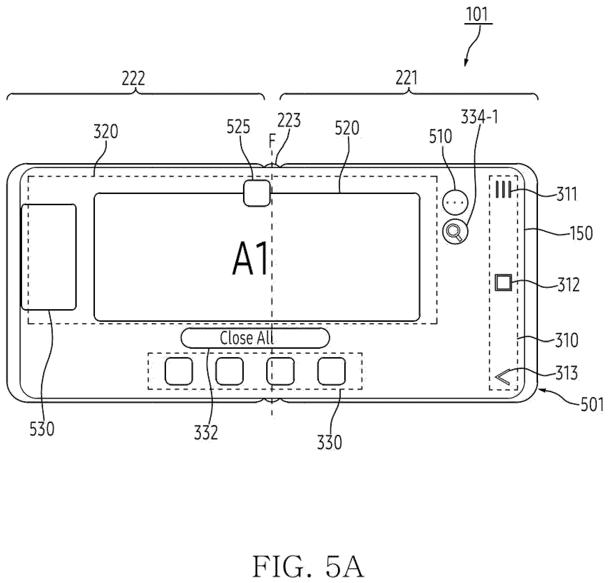

Referring to FIGS. 3A to 3B and/or FIGS. 4A to 4B, an operation in which the electronic device 101 displays a UI in the flexible display 150 based on a portrait mode will be described. Hereinafter, an example of an operation in which the electronic device 101 displays the overview screen in the flexible display 150 based on another mode (e.g., landscape mode) different from the portrait mode will be described with reference to FIGS. 5A to 5B.

FIGS. 5A to 5B illustrate an example of screens in which an electronic device 101 according to an embodiment displays in different states 501 and 502 distinguished by a shape of a flexible display 150. The electronic device 101 of FIGS. 5A to 5B may be an example of the electronic device 101 of FIG. 1 and/or FIGS. 2A to 2B. For example, the electronic device 101 and the flexible display 150 of FIG. 1 may include the electronic device 101 and the flexible display 150 of FIGS. 5A to 5B. A housing 220 of the electronic device 101 of FIGS. 5A to 5B may have a structure corresponding to the housing 220 of FIG. 2A.

The electronic device 101 according to an embodiment may identify a direction of the housing 220 and/or the flexible display 150 based on data obtained from a sensor (e.g., the sensor 140 of FIG. 1). Based on the direction, the electronic device 101 may display a screen in the flexible display 150, based on any one of a landscape mode or a portrait mode. It may be designated modes of the electronic device 101 for adjusting a direction of the screen displayed in the flexible display 150 among the landscape mode and the portrait mode. In order to make a periphery, which is farthest from the ground, among peripheries of the flexible display 150 to an upper end of the screen displayed in the flexible display 150, the electronic device 101 may switch in the designated modes.

In an embodiment in which a height of the flexible display 150 is longer than a width, the state 501 of FIG. 5A may be an exemplary state in which the electronic device 101 has identified acceleration of gravity applied in a direction parallel to the width of the flexible display 150. Based on identifying the acceleration of gravity parallel to the width of the flexible display 150, the electronic device 101 may determine a periphery of the peripheries of the flexible display 150 that is parallel to the height as the upper end of the screen displayed in the flexible display 150, based on the landscape mode. The states 301, 302, 303, 401, and 402 of FIGS. 3A to 4B may be an exemplary state in which the electronic device 101 identifies the acceleration of gravity in a direction parallel to the height of the flexible display 150. Based on identifying the acceleration of gravity parallel to the height, the electronic device 101 may determine a periphery of the peripheries of the flexible display 150 that is parallel to the width as the upper end of the screen displayed in the flexible display 150.

While displaying the screen in the flexible display 150 based on the landscape mode, the electronic device 101 may identify an input indicating to display a list of a plurality of applications executed by a processor (e.g., the processor 120 of FIG. 1) of the electronic device 101, such as an input indicating to select a visual object 311. Referring to FIG. 5A, the exemplary state 501 in which the electronic device 101 displays a designated screen (e.g., an overview screen) including the list in the flexible display 150 based on the input will be illustrated. In the state 501, the electronic device 101 may display the designated screen together with a navigation bar displayed through a portion 310.

Referring to FIG. 5A, in the state 501 in which the electronic device 101 has a shape associated with an unfolded state, the electronic device 101 may display the designated screen including the list of applications in a display region of the flexible display 150 including a folding axis F. Referring to the state 302 of FIG. 3A and the state 501 of FIG. 5A, the electronic device 101 may display the designated screen along a direction perpendicular to the designated screen displayed in the state 302 of FIG. 3A. For example, unlike the state 302 of FIG. 3A in which the list scrollable along a direction of the width of the flexible display 150 is displayed, the electronic device 101 may display the list scrollable along a direction of the height of the flexible display 150 in the state 501 of FIG. 5A. Referring to FIG. 5A, in a portion 320 of the flexible display 150, the electronic device 101 may display images 520 and 530 corresponding to each of the plurality of applications included in the list along the direction of the height of the flexible display 150. The electronic device 101 may display at least one icon representing each of the plurality of applications in the portion 320, such as an icon 525 matched to the image 520.

Referring to FIG. 5A, the electronic device 101 may display another list (e.g., a hot sheet) in which the flexible display 150 includes one or more icons corresponding to one or more applications designated by a user in a portion 330 together with the list displayed in the portion 320. The electronic device 101 may display a visual object 332 corresponding to a function for terminating all applications included in the list displayed through the portion 320. Similar to the visual object 334 of FIG. 3A, the electronic device 101 may display a visual object 334-1 for receiving text associated with a search function. The electronic device 101 may display a visual object 510 for displaying a screen (e.g., a setting screen) for adjusting at least one parameter associated with the list displayed in the portion 320.

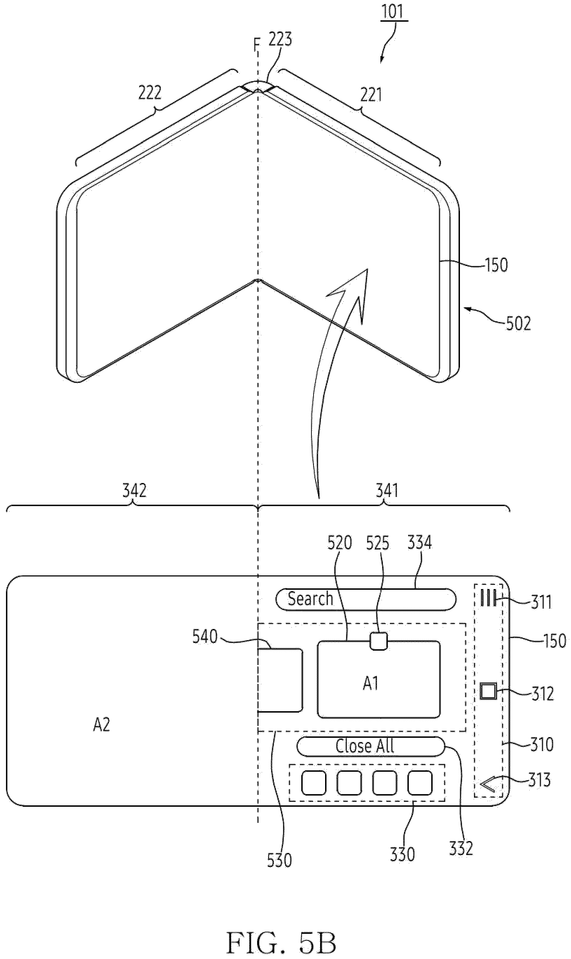

The electronic device 101 according to an embodiment may change a layout of a designated screen including the portion 520 adaptively to the shape of the flexible display 150. Referring to FIG. 5B, based on identifying that an angle of the flexible display 150 folded by the folding axis F is included in an angle range (e.g., the second designated angle range of FIGS. 2A to 2B) corresponding to a flex state, the electronic device 101 may selectively display the designated screen in any one of a first portion 341 to a second portion 342 distinguished by the folding axis F. The state 502 of FIG. 5B may be an exemplary state in which the electronic device 101 displays a designated screen in the second portion 342 based on the landscape mode.

In the state 502 of displaying the designated screen in the second portion 342, the electronic device 101 may display a screen corresponding to a foreground application in the first portion 341 different from the second portion 342. Referring to FIG. 5B, the electronic device 101 may display a screen A2 corresponding to a first application corresponding to the image 520 having the largest size among the images 520 and 540 displayed through the portion 320, in the first portion 341. The image 520 may include a screen shot representing a screen A1 corresponding to the first application at a time point when an input for displaying the designated screen is received. In the state 502 of displaying the image 520 having an aspect ratio of the display region of the flexible display 150, the electronic device 101 may display the screen A2 having an aspect ratio of the first portion 341, in the first portion 341.

Hereinafter, an embodiment of the electronic device 101 having a structure based on the housing 220 of FIG. 2B will be described with reference to FIGS. 6A to 6B.

FIGS. 6A to 6B illustrate an example of screens in which an electronic device 101 according to an embodiment displays in different states 601, 602, 603, and 604 distinguished by orientation of the electronic device 101 identified by a sensor. The electronic device 101 of FIGS. 6A to 6B may be an example of the electronic device 101 of FIG. 1 and/or FIGS. 2A to 2B. For example, the electronic device 101 and the flexible display 150 of FIG. 1 may include the electronic device 101 and a flexible display 150 of FIGS. 6A to 6B. Referring to FIGS. 6A to 6B, an embodiment of the electronic device 101 having a structure based on the housing 220 of FIG. 2B will be illustrated.

Referring to FIG. 6A, the exemplary states 601 and 602 in which the electronic device 101 operates in a landscape mode are illustrated, based on acceleration of gravity applied along a direction parallel to a width of the flexible display 150. In the state 601, the electronic device 101 may have a shape corresponding to an unfolded state. In the state 602, the electronic device 101 may have a shape corresponding to a flex state. The electronic device 101 may obtain data associated with a shape of the flexible display 150 that is foldable by a folding axis F using a sensor (e.g., the sensor 140 of FIG. 1). Based on the data, the electronic device 101 may identify an angle of the flexible display 150 folded by the folding axis F. Based on the angle, the electronic device 101 may identify a state of the electronic device 101 including the unfolded state or the flex state.

The states 601 and 602 of FIG. 6A may include exemplary states in which the electronic device 101 displays a list of a plurality of applications executed by a processor of the electronic device 101 in the flexible display 150 based on an input indicating to select a visual object 311. In the state 601 of FIG. 6A, similar to the state 302 of FIG. 3A, the electronic device 101 having a shape corresponding to the unfolded state may display the list based on an entire display region of the flexible display 150. For example, a portion 320 in which an image 621 based on the list is displayed may be displayed across the folding axis F. In the state 602 of FIG. 6A, similar to the state 303 of FIG. 3B, the electronic device 101 having a shape corresponding to the flex state may selectively display the list in any one (e.g., a second portion 612) of a first portion 611 and the second portion 612, distinguished by the folding axis F in the display region of the flexible display 150. For example, the portion 320 in which images 1621, 622, and 623 based on the list are displayed may be displayed spaced apart from the folding axis F.

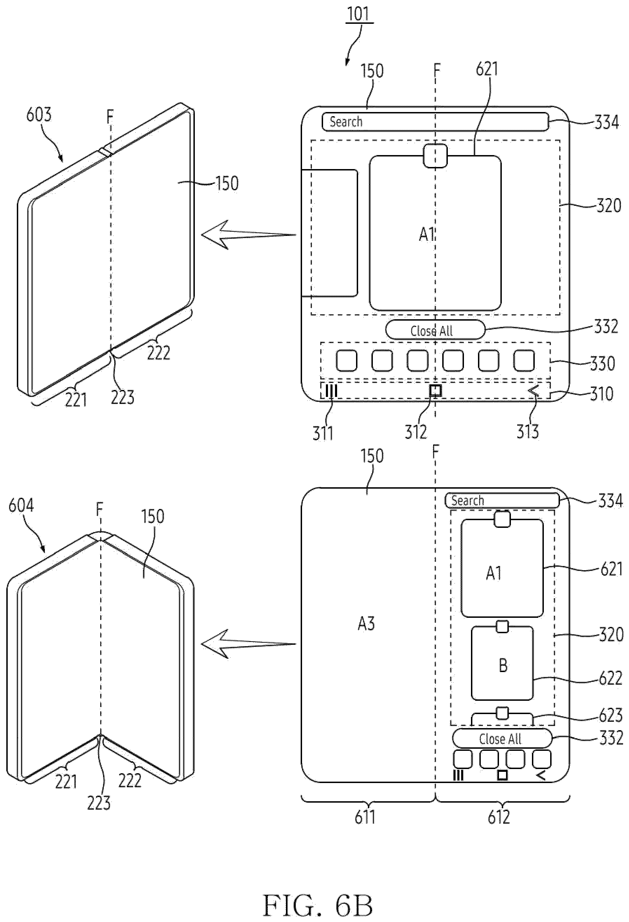

Referring to FIG. 6B, the exemplary states 603 and 604 in which the electronic device 101 operates in a portrait mode are illustrated, based on the acceleration of gravity applied along a direction parallel to a height of the flexible display 150. In each of the states 603 and 604, the shape of the electronic device 101 may have a shape corresponding to each of the unfolded state and the flex state. As described above with reference to FIG. 6A, the electronic device 101 may switch between the states 603 and 604 based on the angle of the flexible display 150 folded by the folding axis F using the sensor.

Referring to FIG. 6B, in each of the states 603 and 604, in response to an input indicating to display the list of the plurality of applications executed by the processor (e.g., the processor 120 of FIG. 1) of the electronic device 101, the electronic device 101 may display a designated screen including the list in at least a portion of the flexible display 150. In the state 603 in which the electronic device 101 identifies the flexible display 150 having a plane shape, such as the unfolded state, similar to the state 302 of FIG. 3A and/or the state 601 of FIG. 6A, the electronic device 101 may display at least one image (e.g., the image 621) associated with the list of the plurality of applications based on the portion 320 including the folding axis F. In the state 604 in which the electronic device 101 identifies the flexible display 150 having a curved shape bent by the folding axis F, such as the flex state, similar to the state 303 of FIG. 3B and/or the state 602 of FIG. 6A, the electronic device 101 may display at least one image (e.g., the images 621, 622, and 623) associated with the list based on the portion 320 spaced apart from the folding axis F.

An operation of the electronic device 101 associated with portions 310, 320, and 330 and visual objects 332 and 334 respectively displayed in the states 601, 602, 603, and 604 of FIGS. 6A to 6B may be performed similarly to the operation described above with reference to FIGS. 3A to 3B. For example, in the states 602 and 604 of FIGS. 6A to 6B that display the designated screen in the second portion 612 of the flexible display 150 positioned on a second housing 222, the electronic device 101 may display a screen corresponding to a specific application in response to an input indicating to select the specific application in the designated screen, in the first portion 611 of the flexible display 150 positioned on a first housing 221. While the images 621, 622, and 623 based on an aspect ratio of the entire display region of the flexible display 150 are displayed in the designated screen, the electronic device 101 may display the screen corresponding to the specific application in the first portion 611 based on an aspect ratio of the first portion 611.

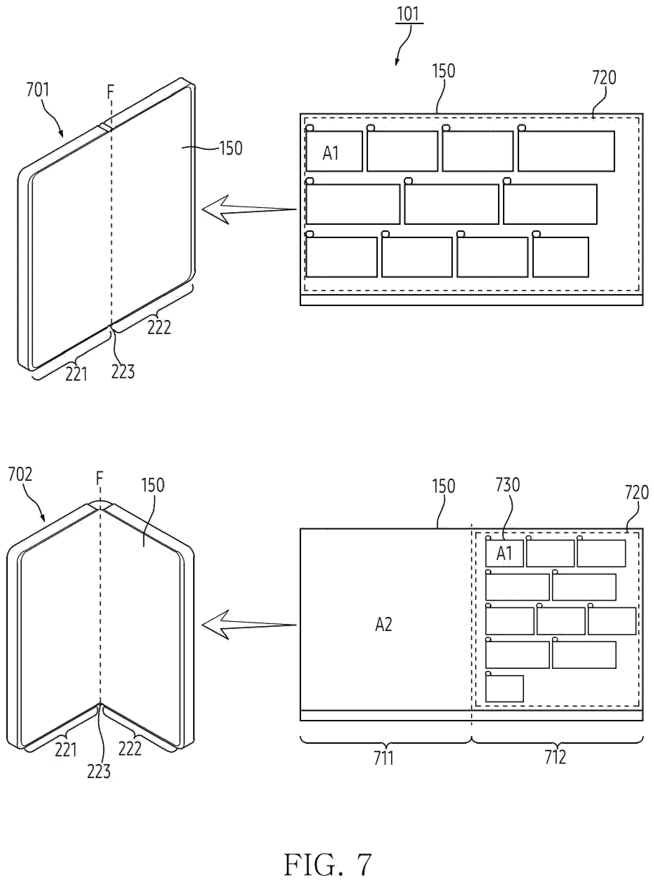

A layout of the list of the plurality of applications executed by the processor of the electronic device 101 is not limited to the above-described embodiment. Hereinafter, an operation in which the electronic device 101 according to an embodiment displays the list of the plurality of applications based on a layout different from the layout will be described with reference to FIG. 7.

FIG. 7 illustrates an example of screens in which an electronic device 101 according to an embodiment displays in different states 701 and 702 distinguished by a shape of a flexible display 150. The electronic device 101 of FIG. 7 may be an example of the electronic device 101 of FIG. 1 and/or FIGS. 2A to 2B. For example, the electronic device 101 and the flexible display 150 of FIG. 1 may include the electronic device 101 and the flexible display 150 of FIG. 7. Referring to FIG. 7, an embodiment of the electronic device 101 having a structure based on the housing 220 of FIG. 2B will be illustrated. A size of the flexible display 150 of FIG. 7 may be larger than the size of the flexible display 150 of FIGS. 6A to 6B (e.g., a size exceeding 12 inches in a diagonal direction). However, the embodiment is not limited thereto.

Referring to FIG. 7, similar to the states 603 and 604 of FIG. 6B, the exemplary states 701 and 702 in which the electronic device 101 operates in a portrait mode will be illustrated. In the state 701, the electronic device 101 may identify the flexible display 150 having a shape in an unfolded state. In the state 702, the electronic device 101 may identify the flexible display 150 having a shape in a flex state. The states 701 and 702 may be exemplary states of displaying a screen 720 including a list, based on an input indicating to display the list of a plurality of applications executed by a processor (e.g., the processor 120 of FIG. 1) of the electronic device 101. The screen 720 may be an example of a designated screen (e.g., an overview screen) described above with reference to FIGS. 3A to 3B. The input may be identified based on a gesture of touching and/or clicking a visual object (e.g., the visual object 311 of FIGS. 3A to 3B) for displaying the list. The embodiment is not limited thereto, and the input may be identified based on a shortcut, a hot key, or a key combo identified through a keyboard (e.g., an actual keyboard, and/or a virtual keyboard displayed in the flexible display 150) of the electronic device 101. The shortcut may be identified, for example, by a gesture of simultaneously pressing designated buttons (e.g., alt button and tab button) included in the keyboard.

Referring to FIG. 7, the electronic device 101 according to an embodiment may visualize the list of the plurality of applications executed by the processor (e.g., the processor 120 of FIG. 1) of the electronic device 101 in the screen 720. Visualization of the list, performed by the electronic device 101, may include an operation of displaying visual objects (e.g., a card 730) corresponding to each of the plurality of applications included in the list. Referring to FIG. 7, in the screen 720, an embodiment in which the electronic device 101 positions visual objects on a two-dimensional plane will be illustrated. The visual objects may include screen shots of screens corresponding to each of the plurality of applications.

The electronic device 101 according to an embodiment may change a layout of the screen 720 based on different forms of the electronic device 101 including the states 701 and 702. In the state 701 in which the flexible display 150 has a plane shape, the electronic device 101 may display the screen 720 on an entire display region of the flexible display 150. In the state 702 in which the flexible display 150 has a shape of a curved surface (e.g., a curved surface bent by a folding axis F), the electronic device 101 may display the screen 720 in a portion (e.g., a second portion 712) having a shape of the plane in the flexible display 150. In another portion (e.g., a first portion 711) different from the portion at which the screen 720 is displayed, the electronic device 101 may display a screen corresponding to a specific application selected by the screen 720. Referring to FIG. 7, in response to an input indicating to select the card 730 corresponding to the specific application from the list displayed through the screen 720 in the second portion 712, the electronic device 101 may display a screen A2 corresponding to the specific application in the first portion 711. The card 730 may include a screen shot A1 of a screen of the specific application at a time point when identifying an input indicating to display the screen 720.

As described above, the electronic device 101 according to an embodiment may display the designated screen (e.g., the screen 720) including the list of the plurality of applications executed by the processor of the electronic device 101 to a user based on multitasking. The electronic device 101 including the flexible display 150 may change a size and/or a layout of the designated screen displayed to the user based on the shape of the flexible display 150. Based on the change of the designated screen, the electronic device 101 may improve user experience based on portions (e.g., the first portion 711 and the second portion 712 of FIG. 7) in the flexible display 150 that are distinguished by deformation of the flexible display 150.

Hereinafter, an operation of the electronic device 101 described above with reference to FIGS. 1 to 7 will be described with reference to FIGS. 8 to 9.

FIG. 8 illustrates an exemplary flowchart for explaining an operation of an electronic device according to an embodiment. The electronic device of FIG. 8 may include the electronic device 101 of FIGS. 1 to 7. Operations of FIG. 8 may be performed, for example, by the electronic device 101 and/or the processor 120 of FIG. 1.

Referring to FIG. 8, in operation 810, the electronic device according to an embodiment may receive an input indicating to display a list of a plurality of applications executed by a processor. The input may include the input indicating to select the visual object 311 of FIGS. 3A to 3B. The plurality of applications may be distinguished between a foreground application or a background application based on whether to be displayed through a flexible display of the electronic device.

Referring to FIG. 8, in operation 820, the electronic device according to an embodiment may identify an angle of the flexible display bent by a folding axis (e.g., the folding axis F of FIGS. 2A to 2B). The electronic device may identify data dependent on the angle by using the sensor 140 of FIG. 1. Based on the data, the electronic device may identify the angle.

Referring to FIG. 8, in operation 830, the electronic device according to an embodiment may determine whether the identified angle is included in a first angle range. The first angle range of the operation 830 may include an angle in which the flexible display has a curved shape as the flexible display in the electronic device is bent by the folding axis. For example, the first angle range of the operation 830 may be associated with the state 202 and/or the second designated angle range of FIGS. 2A to 2B.

In a state of identifying an angle included in a designated angle range (830-Yes), based on operation 840, the electronic device according to an embodiment may display a list including images corresponding to each of screens of the plurality of applications in a first portion of portions of the flexible display distinguished by the folding axis. For example, the electronic device may display the designated screen (or the overview screen) of FIGS. 3A to 3B in the first portion. The first portion may correspond to a plane distinguished by the folding axis in the flexible display.

Referring to FIG. 8, in operation 850, the electronic device according to an embodiment may display a screen corresponding to an application among the plurality of applications included in the list in a second portion of the flexible display, the second portion is different from the first portion of the operation 840. The application corresponding to the screen displayed in the second portion may be classified as the foreground application. In the list displayed through the first portion, based on an input for switching the foreground application, the electronic device may change the screen displayed in the second portion to another screen corresponding to another application selected by the input. Based on the operations 840 and 850, a state in which the electronic device controls the first portion and the second portion may include the state 303 of FIG. 3B, the state 401 of FIG. 4A, the state 502 of FIG. 5B, the state 602 of FIG. 6A, the state 604 of FIG. 6B, and/or the state 702 of FIG. 7.

In a state of identifying an angle different from the designated angle range of the operation 830 (830-No), based on operation 860, the electronic device according to an embodiment may display the list including the images corresponding to each of the screens of the plurality of applications in all the first portion and the second portion of the flexible display. A state in which the electronic device controls the flexible display based on the operation 860 may include the state 302 of FIG. 3A, the state 402 of FIG. 4B, the state 501 of FIG. 5A, the state 601 of FIG. 6A, the state 603 of FIG. 6B, and/or the state 701 of FIG. 7.

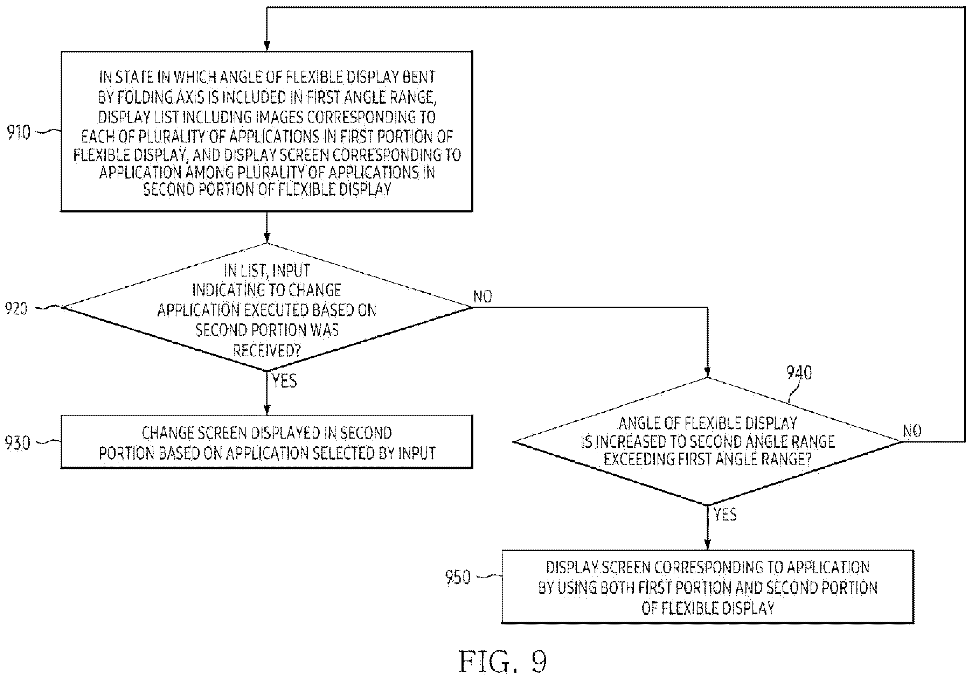

FIG. 9 illustrates an exemplary flowchart for explaining an operation of an electronic device according to an embodiment. The electronic device of FIG. 9 may include the electronic device 101 of FIGS. 1 to 7. Operations of FIG. 9 may be performed, for example, by the electronic device 101 and/or the processor 120 of FIG. 1. At least one of the operations of FIG. 9 may be associated with at least one of the operations of FIG. 8.

Referring to FIG. 9, in operation 910, in a state in which an angle of a flexible display bent by a folding axis is included in a first angle range, the electronic device according to an embodiment may display a list including images corresponding to each of a plurality of applications in a first portion of the flexible display, and may display a screen corresponding to an application among the plurality of applications in a second portion of the flexible display. The electronic device may perform the operation 910 of FIG. 9 similarly to the operations 840 and 850 of FIG. 8. The application corresponding to the screen displayed in the second portion may be a foreground application. A state corresponding to the operation 910 of FIG. 9 may include the state 303 of FIG. 3B, the state 401 of FIG. 4A, the state 502 of FIG. 5B, the state 602 of FIG. 6A, the state 604 of FIG. 6B, and/or the state 702 of FIG. 7. For example, the first angle range of the operation 910 may correspond to the second designated angle range of FIGS. 2A to 2B.

Referring to FIG. 9, in operation 920, the electronic device according to an embodiment may determine whether an input indicating to change an application executed based on the second portion was received, in the list of the operation 910. The input may be identified based on a gesture of selecting an image corresponding to another application different from a specific application matched to the second portion based on the operation 910 among the images displayed through the first portion. The other application may be a background application. The image may include a screen shot of a second application. The image may have an aspect ratio and/or a size of an entire display region of the flexible display.

In a state of receiving the input of the operation 920 (920-Yes), based on operation 930, the electronic device according to an embodiment may change the screen displayed in the second portion based on the application selected by the input of the operation 920. As the screen displayed in the second portion is changed, the foreground application may be changed among a plurality of applications executed by the processor of the electronic device. The operation of the electronic device switching from the state 303 of FIG. 3B to the state 401 of FIG. 4A may be performed based on the operations 910, 920, and 930 of FIG. 9. After performing the operation 930 of FIG. 9, the electronic device may maintain control of the first portion and the second portion based on the operation 910.

In case of not receiving the input of the operation 920 (920-No), in operation 940, the electronic device according to an embodiment may determine whether the angle of the flexible display is increased to a second angle range exceeding the first angle range. The second angle range may correspond to the first designated angle range of FIGS. 2A to 2B. As the angle of the flexible display increases to the second angle range, a shape of the flexible display may have a plane shape.

In a state of identifying that the angle of the flexible display increases to the second angle range (940-Yes), in operation 950, the electronic device according to an embodiment may display a screen corresponding to the application of the operation 910 by using all the first portion and the second portion of the flexible display. The operation of the electronic device switching from the state 401 of FIG. 4A to the state 402 of FIG. 4B may be performed based on the operations 910, 920, 940, and 950 of FIG. 9. Based on the operation 950, the electronic device may cease displaying a designated screen including a list of a plurality of applications in the flexible display.

A method for adaptively displaying a list of applications executed by an electronic device in a deformable flexible display may be required.

As described above, an electronic device (e.g., the electronic device 101 of FIGS. 1 to 7) according to an embodiment may comprise a first housing (e.g., the first housing 221 of FIGS. 2A to 2B), a second housing (e.g., the second housing 222 of FIGS. 2A to 2B), a hinge assembly (e.g., the hinge assembly 223 of FIGS. 2A to 2B) rotatably coupled to the first housing and the second housing based on a folding axis (e.g., the folding axis F of FIGS. 2A to 2B), a flexible display (e.g., the flexible display 150 of FIGS. 1 to 7) positioned on a surface of the first housing and a surface of the second housing, one or more sensors (e.g., the sensor 140 of FIG. 1), memory storing instructions, and a processor (e.g., the processor 120 of FIG. 1) operably coupled to the memory. The processor, when executing the instructions, may be configured to cause the electronic device to compare, in response to an input indicating to display a list of a plurality of applications executed by the processor in the flexible display, an angle (e.g., the angle A of FIGS. 2A to 2B) of the flexible display bent by the folding axis to a first angle range, the angle being identified based on data identified from the one or more sensors. The processor may be configured to display, in response to identifying the angle included in the first angle range, the list including images (e.g., the images 322, 324, and 326 of FIGS. 3A to 3B, the image 410 of FIG. 4A, the images 520, 530, and 540 of FIG. 5A to 5B, and the images 621, 622, and 633 of FIG. 6A to 6B) respectively corresponding to screens of the plurality of applications in a first portion among portions of the flexible display distinguished by the folding axis, and display a first screen corresponding to a first application in a second portion different from the first portion among the portions. The processor may be configured to display, in response to another input indicating to select an image corresponding to a second application, the another input being received in the list displayed in the first portion, a second screen corresponding to the second application selected by the another input in the second portion. The processor may be configured to display, in response to identifying that the angle of the flexible display is increased to a second angle range greater than the first angle range while displaying the second screen in the second portion, a third screen corresponding to the second application in both the first portion and the second portion. The electronic device according to an embodiment may change a position, a shape, and/or a size of the list of the plurality of applications executed by the processor based on a shape of the flexible display.

For example, the one or more sensors may comprise a first sensor positioned at the first housing, and a second sensor positioned at the second housing. The processor may be configured to identify, based on data identified from the first sensor, a first direction of acceleration of gravity applied to the first housing. The processor may be configured to identify, based on data identified from the second sensor, a second direction of the acceleration of gravity applied to the second housing. The processor may be configured to identify, based on whether the first direction and the second direction respectively correspond to a direction of a first region of the flexible display positioned at the first housing, and a direction of a second region of the flexible display positioned at the second housing, the first portion to display the list.

For example, the processor, when executing the instructions, may be configured to cause the electronic device to obtain, in response to the input, the images representing screens of the plurality of applications executed by the processor based on an aspect ratio of a display region of the flexible display including the first portion and the second portion.

For example, the processor may be configured to display, among the images included in the list, a first image corresponding to the first application based on a size larger than other images among the images, which are different from the first image.

For example, the processor, when executing the instructions, may be configured to cause the electronic device to enlarge, based on the another input, a size of an image among the images included in the list that is selected by the another input, to be larger than other images.

For example, the processor, when executing the instructions, may be configured to cause the electronic device to reduce, based on the another input, a size of the first image to be smaller than the image selected by the another input.

For example, the processor, when executing the instructions, may be configured to cause the electronic device to obtain, in response to the another input, the second screen corresponding to the second application, based on a size of the second portion, independently of the image having the aspect ratio of the display region of the flexible display including the first portion and the second portion.

For example, the processor, when executing the instructions, may be configured to cause the electronic device to obtain, based on identifying that the angle of the flexible display is increased to the second angle range, a third screen corresponding to the second application based on a size including the first portion and the second portion.

For example, the processor, when executing the instructions, may be configured to cause the electronic device to display, together with the list displayed in the first portion, a visual object (e.g., the visual object 332 of FIGS. 3A to 3B) to receive an input to terminate all of the plurality of applications associated with the list.

For example, the processor, when executing the instructions, may be configured to cause the electronic device to identify, based on a threshold angle between the first angle range including a right angle and the second angle range including a straight angle, an angle range that the angle of the flexible display is included among the first angle range or the second angle range.

As described above, a method of an electronic device according to an embodiment may comprise obtaining, in response to an input indicating to select a designated visual object (e.g., the visual object 311 of FIGS. 3A to 3B) displayed in a flexible display of the electronic device, a plurality of images respectively corresponding to a plurality of applications executed by a processor of the electronic device. The method may comprise identifying, based on one or more sensors of the electronic device, an angle of the flexible display which is foldable based on a folding axis of the electronic device. The method may comprise displaying, based on identifying an angle of the flexible display included in a first angle range based on the one or more sensors, a list of the plurality of applications based on the plurality of images which are displayed in a first portion among portions of the flexible display distinguished by the folding axis, and displaying a screen corresponding to a first application among the plurality of applications in a second portion different from the first portion. The method may comprise displaying, based on identifying an angle of the flexible display included in a second angle range greater than the first angle range based on the one or more sensors, the list of the plurality of applications based on the plurality of images in a display region of the flexible display including the first portion and the second portion.

For example, the obtaining the plurality of images may comprise obtaining the plurality of images including screen shots of the plurality of applications. An aspect ratio of each of the screen shots may be matched to an aspect ratio of the display region of the flexible display including the portions.

For example, the identifying may comprise identifying, among the first angle range including a right angle, the second angle range including a straight angle, and a third angle range smaller than the first angle range, an angle range including the angle.

For example, the displaying the first screen may comprise displaying, based on another size larger than a size of other images among the plurality of images different from the first image, a first image corresponding to the first application, among the plurality of images displayed in the first portion.

For example, the displaying the first screen may comprise displaying, in response to another input indicating to select a second image different from the first image among the plurality of images, a second screen corresponding to a second application associated with the second image and different from the screen which is a first screen.

As described above, a method of an electronic device according to an embodiment may comprise comparing, in response to an input indicating to display a list of a plurality of applications executed by a processor of the electronic device in a flexible display of the electronic device, an angle of the flexible display bent by a folding axis of a housing of the electronic device to a first angle range, the angle being identified based on data identified from one or more sensors of the electronic device. The method may comprise displaying, in response to identifying the angle included in the first angle range, the list including images respectively corresponding to screens of the plurality of applications in a first portion among portions of the flexible display distinguished by the folding axis, and displaying (e.g., the operations 840 and 850 of FIG. 8) a first screen corresponding to a first application in a second portion different from the first portion among the portions. The method may comprise displaying, in response to another input indicating to select an image corresponding to a second application, the another input being received in the list displayed in the first portion, a second screen corresponding to the second application selected by the another input in the second portion. The method may comprise displaying, in response to identifying that the angle of the flexible display is increased to a second angle range greater than the first angle range while displaying the second screen in the second portion, a third screen corresponding to the second application in both the first portion and the second portion.

For example, the displaying the first screen may comprise obtaining, in response to the input, the images representing screens of the plurality of applications executed by the processor based on an aspect ratio of a display region of the flexible display including the first portion and the second portion.

For example, the displaying the first screen may comprise displaying, among the images included in the list, a first image corresponding to the first application based on a size larger than other images among the images, which are different from the first image.

For example, the displaying the second screen may comprise enlarging, based on the another input, a size of an image among the images included in the list that is selected by the another input, to a size larger than other images.

For example, the displaying the second screen may comprise obtaining, in response to the another input, the second screen corresponding to the second application, based on a size of the second portion, independently of the image having the aspect ratio of the display region of the flexible display including the first portion and the second portion.

As described above, an electronic device (e.g., the electronic device 101 of FIGS. 1 to 7) according to an embodiment may comprise a first housing (e.g., the first housing 221 of FIGS. 2A to 2B), a second housing (e.g., the second housing 222 of FIGS. 2A to 2B), a hinge assembly (e.g., the hinge assembly 223 of FIGS. 2A to 2B) rotatably coupled to the first housing and the second housing based on a folding axis (e.g., the folding axis F of FIGS. 2A to 2B), a flexible display (e.g., the flexible display 150 of FIGS. 1 to 7) positioned on a surface of the first housing and a surface of the second housing, one or more sensors (e.g., the sensor 140 of FIG. 1), memory storing instructions, and a processor (e.g., the processor 120 of FIG. 1) operably coupled to the memory. The processor, when executing the instructions, may be configured to cause the electronic device to obtain, in response to an input indicating to select a designated visual object (e.g., the visual object 311 of FIGS. 3A to 3B) displayed in a flexible display, a plurality of images (e.g., the images 322, 324, and 326 of FIGS. 3A to 3B, the image 410 of FIG. 4A, the images 520, 530, and 540 of FIGS. 5A to 5B, and the images 621, 622, and 623 of FIGS. 6A to 6B) respectively corresponding to a plurality of applications executed by the processor. The processor may be configured to identify, based on the one or more sensors, an angle of the flexible display which is foldable based on the folding axis. The processor may be configured to display, based on identifying an angle of the flexible display included in a first angle range based on the one or more sensors, a list of the plurality of applications based on the plurality of images which are displayed in a first portion among portions of the flexible display distinguished by the folding axis, and display a screen corresponding to a first application among the plurality of applications in a second portion different from the first portion. The processor may be configured to display, based on identifying an angle of the flexible display included in a second angle range greater than the first angle range based on the one or more sensors, the list of the plurality of applications based on the plurality of images in a display region of the flexible display including the first portion and the second portion.

For example, the processor, when executing the instructions, may be configured to cause the electronic device to obtain the plurality of images based on a first aspect ratio of a portion of the portions in response to the input in a first state in which the angle of the flexible display is included in the first angle range. The processor may be configured to obtain the plurality of images based on a second aspect ratio of the display region including the portions in response to the input in a second state in which the angle of the flexible display is included in the second angle range, the second state being different from the first state.

For example, the processor, when executing the instructions, may be configured to cause the electronic device to identify, among the first angle range including the right angle, the second angle range including a straight angle, and a third angle range smaller than the first angle range, an angle range including the angle.

For example, the processor, when executing the instructions, may be configured to cause the electronic device to display, based on another size larger than a size of other images among the plurality of images different from a first image, the first image corresponding to the first application, among the plurality of images displayed in the first portion.

For example, the processor, when executing the instructions, may be configured to cause the electronic device to display, in response to another input indicating to select a second image different from the first image among the plurality of images, a second screen corresponding to a second application associated with the second image and different from the screen which is a first screen.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device, comprising:
a first housing;
a second housing;
a hinge assembly rotatably coupled to the first housing, and the second housing, based on a folding axis (F);
a flexible display positioned on a surface of the first housing and a surface of the second housing;
one or more sensors;
memory storing instructions; and
a processor operably coupled to the memory, and
wherein the processor, when executing the instructions, is configured to cause the electronic device to:
compare, in response to an input indicating to display a list of a plurality of applications executed by the processor in the flexible display, an angle of the flexible display bent by the folding axis to a first angle range, the angle being identified based on data of the one or more sensors;
display, in response to identifying the angle included in the first angle range, the list including images respectively corresponding to screens of the plurality of applications in a first portion among portions of the flexible display distinguished by the folding axis, and display a first screen corresponding to a first application in a second portion different from the first portion among the portions;
display, in response to another input indicating to select an image corresponding to a second application, the another input being received in the list displayed in the first portion, a second screen corresponding to the second application selected by the another input in the second portion; and
display, in response to identifying that the angle of the flexible display is increased to a second angle range greater than the first angle range while displaying the second screen in the second portion, a third screen corresponding to the second application in both the first portion and the second portion.

2. The electronic device of claim 1, wherein the one or more sensors comprising:
a first sensor positioned at the first housing; and
a second sensor positioned at the second housing,
wherein the processor, when executing the instructions, is configured to cause the electronic device to:
identify, based on data identified from the first sensor, a first direction of acceleration of gravity applied to the first housing;
identify, based on data identified from the second sensor, a second direction of the acceleration of gravity applied to the second housing; and
identify, based on whether the first direction and the second direction respectively correspond to a direction of a first region of the flexible display positioned at the first housing, and a direction of a second region of the flexible display positioned at the second housing, the first portion to display the list.

3. The electronic device of any one of claim 1 to claim 2, wherein the processor, when executing the instructions, is configured to cause the electronic device to:
obtain, in response to the input, the images representing screens of the plurality of applications executed by the processor based on an aspect ratio of a display region of the flexible display including the first portion and the second portion.

4. The electronic device of any one of claim 1 to claim 3, wherein the processor, when executing the instructions, is configured to cause the electronic device to:
display, among the images included in the list, a first image corresponding to the first application based on a size larger than other images among the images, which are different from the first image.

5. The electronic device of any one of claim 1 to claim 4, wherein the processor, when executing the instructions, is configured to cause the electronic device to:
enlarge, based on the another input, a size of an image among the images included in the list that is selected by the another input, to be larger than other images.

6. The electronic device of any one of claim 1 to claim 5, wherein the processor, when executing the instructions, is configured to cause the electronic device to:
reduce, based on the another input, a size of the first image to be smaller than the size of the image selected by the another input.

7. The electronic device of any one of claim 1 to claim 6, wherein the processor, when executing the instructions, is configured to cause the electronic device to:
obtain, in response to the another input, the second screen corresponding to the second application, based on a size of the second portion, independently of the image having the aspect ratio of the display region of the flexible display including the first portion and the second portion.

8. The electronic device of any one of claim 1 to claim 7, wherein the processor, when executing the instructions, is configured to cause the electronic device to:
obtain, based on identifying that the angle of the flexible display is increased to the second angle range, a third screen corresponding to the second application based on a size including the first portion and the second portion.

9. The electronic device of any one of claim 1 to claim 8, wherein the processor, when executing the instructions, is configured to cause the electronic device to:
display, together with the list displayed in the first portion, a visual object to receive an input to terminate all of the plurality of applications associated with the list.

10. The electronic device of any one of claim 1 to claim 9, wherein the processor, when executing the instructions, is configured to cause the electronic device to:
identify, based on a threshold angle between the first angle range including a right angle and the second angle range including a straight angle, an angle range that the angle of the flexible display is included.

11. A method of an electronic device comprising:
obtaining, in response to an input indicating to select a designated visual object displayed in a flexible display of the electronic device, a plurality of images respectively corresponding to a plurality of applications executed by a processor of the electronic device;
identifying, based on one or more sensors of the electronic device, an angle of the flexible display which is foldable based on a folding axis of the electronic device;
displaying, based on identifying an angle of the flexible display included in a first angle range based on the one or more sensors, a list of the plurality of applications based on the plurality of images which are displayed in a first portion among portions of the flexible display distinguished by the folding axis, and displaying a screen corresponding to a first application among the plurality of applications in a second portion different from the first portion; and
displaying, based on identifying an angle of the flexible display included in a second angle range greater than the first angle range based on the one or more sensors, the list of the plurality of applications based on the plurality of images in a display region of the flexible display including the first portion and the second portion.

12. The method of claim 11, wherein the obtaining the plurality of images comprising:
obtaining the plurality of images including screen shots of the plurality of applications,
wherein an aspect ratio of each of the screen shots is matched to an aspect ratio of the display region of the flexible display including the portions.

13. The method of any one of claim 11 to claim 12, wherein the identifying comprising:
identifying, among the first angle range including a right angle, the second angle range including a straight angle, and a third angle range smaller than the first angle range, an angle range including the angle.

14. The method of any one of claim 11 to claim 13, wherein the displaying the first screen comprising:
displaying, based on another size larger than a size of other images among the plurality of images different from the first image, a first image corresponding to the first application, among the plurality of images displayed in the first portion.

15. The method of any one of claim 11 to claim 14, wherein the displaying the first screen comprising:
displaying, in response to another input indicating to select a second image different from the first image among the plurality of images, a second screen corresponding to a second application associated with the second image and different from the screen which is a first screen.
